# EUROPEAN PATENT SPECIFICATION

(11) **EP 3 905 158 B1**
(45) Date of publication and mention of the grant of the patent: **24.12.2025**
(21) Application number: 21170640.3
(22) Date of filing: 27.04.2021
(51) Int. Cl.: G06Q 10/06

(54) **DLT-BASED DEMAND SENSING NETWORK**
DLT-BASIERTES BEDARFSERKENNUNGSNETZWERK
RÉSEAU DE DÉTECTION DE LA DEMANDE BASÉ SUR LE DLT

(30) Priority: 27.04.2020 US 202063016108 P
(43) Date of publication of application: 03.11.2021
(73) Proprietor: Accenture Global Solutions Limited, Dublin 4 (IE)
(72) Inventor: MESZAROS, Richard T., Westworth Village, 76114 (US); CARTELLONE, Joshua, Lewis Center, 43035 (US); TRAENKLE, Justin Paul, Raleigh, 27607 (US); VISKIN, Tal, Watertown, 02472 (US)
(74) Representative: Müller-Boré & Partner Patentanwälte PartG mbB

(56) References cited:
- EP-A1- 3 624 026
- WO-A1-2019/018278
- WO-A1-2020/023441
- US-A1- 2019 180 291
- US-A1- 2020 118 086
- US-B1- 9 760 854

## Description

### CROSS-REFERENCE TO RELATED APPLICATION

The present application claims the benefit of U.S. Provisional Patent Application No. 63/016,108, entitled "DLT-BASED DEMAND SENSING NETWORK" filed on April 27, 2020, the contents of which are incorporated herein by reference in their entirety.

### TECHNICAL FIELD

The present application relates to distribution networks and more particularly to demand sensing networks that leverage distributed ledger technology (DLT) to dynamically control and respond to changes in demand for resource within the distribution network.

### BACKGROUND

The outbreak of COVID-19 has impacted the world in many ways and has highlighted shortcomings across a variety of industries, including deficiencies in the management of supply chains in a variety of industries. Notably, the shortcomings have highlighted the reactive nature of current supply chain management technologies and how disruptions to the supply chain can lead to artificial shortages in supply and significant waste. As used herein, artificial shortages means shortages of a product in a supply chain despite ample supply of the product in another supply chain or a different outlet within the supply chain. For example, COVID-19 related shutdowns of restaurants and other commercial users of agricultural products have created supply chain disruptions that have caused food producers to destroy millions of products while many people go hungry or cannot buy those products due to lack of food in retail establishments, such as grocery stores (e.g., the lack of food in retail establishments is not due to a lack of food being produced but a problem with the supply chain directing the food products being produced to the appropriate locations).

One reason this occurs is that food producers may have established channels of communication for distributing agricultural and food products to one type of supply chain, such as a commercial user that purchases products in larger quantities than individuals, but may not have established channels to other types of food product outlets, such as grocery stores that supply food products to individuals (e.g., via local grocery stores or other outlets). This may occur because the channels of communication used by the producers enable the producers to learn of demand from the large commercial users while not providing the producers any visibility into demand from other supply chain outlets. Thus, existing supply chain networks and the technologies that support them do not provide capabilities to detect changes to the supply chain and changes to demand for resources (e.g., raw materials, products, and the like) within the supply chain in a manner that allows real-time or near-real-time responses to be enacted to address the changing supply chain environment.

It is noted that problems related to artificial shortages are just one example of the shortcomings of existing supply chain technologies and that other problems may occur in supply chains. For example, as a result of COVID-19 many manufacturers were forced to shut down production facilities entirely or operate at a diminished capacity. The reduced production associated with these shutdowns often resulted in actual shortages of products. In addition to COVID-19, shortages also may occur due to weather events (e.g., floods, tornadoes, etc.) or other disasters (e.g., fires). For example, a fire may destroy a manufacturing facility or a flood may knock out portions of the power grid and both of these different events may create actual shortages for products. When actual shortages occur it may be difficult to identify the full impact of those shortages, which may make it more difficult to respond and deploy resources of a supply in an efficient manner to mitigate the impact that actual shortages may cause. EP 3 624 026 A1 describes a method of end-to-end supply chain management. Industrial equipment, among other entities, can be nodes on a decentralized industrial control network. A blockchain database can be implemented on a distributed ledger. Nodes on the decentralized industrial control network can autonomously participate in the manufacturing process to produce products according to manufacturing instructions. D1 mentions that a permissioned blockchain or a private blockchain could be used in some implementation of the distributed ledger (see D1, Par. [0012]).

US 2020/118086 A1 relates to systems, methods, computer-readable media, and devices for managing a replacement process. A request is received from a user to perform maintenance on a product. An event based on node supply chain relationships specified within a smart contract is created in accordance with a rule or policy of the smart contract. The event, which is based on at least one condition that is in accordance with fulfilling the rule or policy of the smart contract, is sent to a node on a distributed network, where the node is configured to automatically execute the condition. Decentralized status information for the product is updated when the event has been fulfilled, and read access to the decentralized status information of the product is granted to at least one node on the distributed network.

### SUMMARY

The disclosed embodiments provide for systems, methods, and computer-readable storage media that utilize DLT techniques to enable changes to demand within a supply chain to be identified in real-time and implement operations to efficiently respond to those changes in a manner that provides efficient and equitable distribution of products in a supply chain. A demand sensing network is disclosed and includes a plurality of DLT nodes. The DLT nodes may be operated by a plurality of supply chain participants, such as manufacturers, producers, wholesalers, franchisers/franchisees, retailers, distribution and logistics service providers, and other entities involved in processes to produce, transport, and provide products (e.g., electronics, medical supplies, food, etc.) to consumers. The DLT nodes may provide secure and private storage of supply chain data (e.g., supply and demand data) and serve as points of entry for each of the supply chain participants to access the demand sensing network.

Each of the DLT nodes of the demand sensing network may maintain permission data that enables supply chain data of the different supply chain participants to be shared (in real-time) with DLT nodes associated with other supply chain participants. The permission-based sharing of supply chain data may enable one supply chain participant to signal a change in demand (e.g., increased or decreased demand) to other market participants or other types of information (e.g., product inventory levels, product locations, and the like). The sharing of real-time supply chain data between authorized supply chain participants may enable rapid detection of changes within the supply chain, such as the sudden changes in demand that occurred at the onset of the pandemic in the United States in 2020, which may help producers and manufacturers gain insights into the demand needs of consumer-facing supply chain participants (e.g., restaurants, grocery stores, and the like) and to more efficiently route products to supply chain participants experiencing higher demands.

The demand sensing network may also enable the DLT nodes to leverage shared supply chain data and may also enable new channels of communication and distribution within the supply chain. For example, one supply chain participant may experience a significant decrease in demand while another supply chain participant experiences a surge in demand for the same product, such as when grocery stores experienced a significant increase in demand for produce and restaurants experienced a significant decrease in sales due to COVID-19 in the spring of 2020. When this occurred, the shortages of produce that occurred at the grocery stores were not caused by a lack of production by farmers-instead, the shortages were caused because the farmers did not have the relationships or ability to identify the grocery stores as potential sources for the produce they were producing. Utilizing the demand sensing network, the producer of a product may be enabled to learn of the decreased demand in one supply chain distribution channel (e.g., the restaurants that were shut down) and to identify an alternative channel for the product, such as the supply chain participant that is experiencing the surge in demand (e.g., the grocery stores).

In an aspect, the demand sensing network may include a demand management device (e.g., a DLT node) that operates as an intermediary between the DLT nodes associated with the various supply chain participants. For example, the demand management device may operate as a gateway between the different DLT nodes of the supply chain participants to facilitate sharing of data in accordance with the configured permissions and to coordinate and initiate actions to improve the way that the participants respond to changing demand across the supply chain with respect to the production and distribution of products. For example, where demand for a product drops for one supply chain participant and rises at another, a supply chain participant having on-hand quantities of the product may detect the changing demand based on supply chain data shared by the different supply chain participants. In response to learning about the changes to the demand, a DLT node associated with the supply chain participant that has the on-hand quantity of the product may share information with the DLT nodes of the demand sensing network. As a result of the sharing, the demand management device (or another DLT node of the demand sensing network) may determine to modify production processes to decrease production until the on-hand quantities of the product are at reasonable levels. Additionally or alternatively, modifications with respect to how consumers receive the products from the consumer-facing supply chain participants may be implemented, such as to route a larger portion of the on-hand quantities of the product to participant(s) where demand remains high and less (or none) of the product to supply chain participants experience decreased demand. In some instances, the demand sensing network may determine to offer a promotion or other offer at the locations where the demand is lower in order to increase demand. Using such techniques, the demand sensing network may dynamically respond to the changing demand so as to provide products to areas where demand is high, resulting in improved efficiency and ensuring that adequate quantities of the product are available to customers in different geographic areas.

In some aspects, smart contracts may be utilized to automate various operations within the demand sensing network. The operations and functionality provided by the smart contracts may be used to control authorization and execution of actions to dynamically route or redirect products within the supply chain in response to changing demand. Dynamically routing or redirecting products within the supply chain may include altering delivery locations for products such that all or a portion of a product delivery intended for first supply chain participant is delivered to a supply chain participant in response to changing demand. Additionally, the smart contracts may be used to establish industry groups and provide governance within the industry group, such as to establish an industry group associated with different retailers and to prioritize supply of a product within the industry group.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

Thus, according to an aspect, the objective relates to improving the data sharing process in a decentralized system. This objective is achieved by the subject-matter of the independent claims. Particular embodiments are defined in the dependent claims.

### BRIEF DESCRIPTION OF THE DRAWINGS

For a more complete understanding of the disclosed methods and apparatuses, reference should be made to the implementations illustrated in greater detail in the accompanying drawings, wherein:
FIG. 1 is a block diagram of a system in accordance with embodiments of the present disclosure;
FIG. 2 is a block diagram illustrating exemplary operations of a demand sensing network in accordance with embodiments of the present disclosure;
FIG. 3 is a block diagram illustrating aspects of providing governance within a demand sensing network in accordance with embodiments of the present disclosure; and
FIG. 4 is a flow diagram of a method for controlling operations within a supply chain in accordance with embodiments of the present disclosure

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION

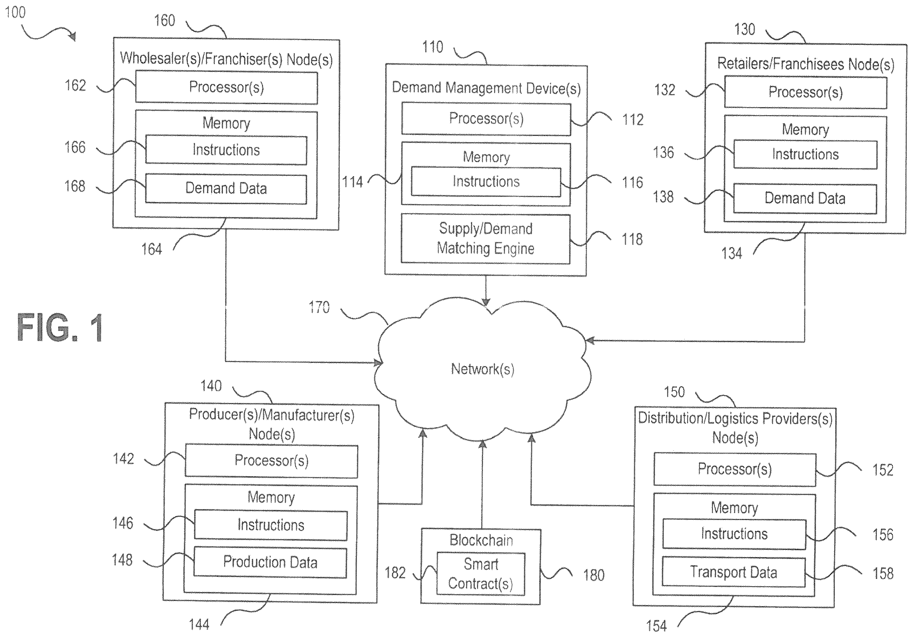

Embodiments of present disclosure provide improved techniques for monitoring and managing supply chains via a demand sensing network configured to leverage DLT nodes. As described in more detail below, the supply chain management techniques of embodiments enable rapid detection of changes to supply and demand for products within the supply chain. The demand sensing network also provides capabilities to identify new distribution channels for products based on changes to demand. For example, where a quantity of a product is intended for a supply chain participant that experiences a significant drop in demand, the demand sensing network may detect the drop in demand, determine whether any other supply chain participants are experiencing an increase in demand, and allocate at least a portion of the supply of the product intended for the supply chain participant experiencing the drop in demand to the supply chain participant(s) experiencing the increase in demand. Such capabilities may be leveraged to prevent waste (e.g., spoilage) or other negative events within the supply chain. Aspects of the disclosed demand sensing networks may also be configured to determine actions to change the production of a product, such as to increase or decrease the production rate of the product in order to maintain production at levels commensurate with real-time demand and may also generate campaigns to increase demand for the product at supply chain participants. The exemplary operations described above highlight some of the advantages and operations of demand sensing networks according to embodiments of the present disclosure-however, it is noted that additional advantages and operations of embodiments are described below with respect to FIGs. 1-4.

Referring to FIG. 1, a block diagram of a demand sensing network in accordance with embodiments of the present disclosure is shown as a demand sensing network 100. The demand sensing network 100 may provide improved real-time (e.g., changes may be detected within seconds) or near-real-time (e.g., changes may be detected within minutes or hours) visibility with respect to dynamically changing demand across a supply chain and enable rapid identification of new channels of distribution for products based on changes to demand within the supply chain, such as to connect a manufacturer or producer with a consumer-facing supply chain participant experiencing a surge in demand when another supply chain participant experiences a drop in demand. Additionally, as will become more apparent from the description below, demand sensing networks in accordance with the present disclosure may enable the cause of changes in demand to be identified, thereby enabling rapid identification of artificial shortages (e.g., particular supply chain participants may experience a shortage while other participants experience significant or sustained demand). It is noted that while some examples described herein may be related to production and distribution of agricultural products, embodiments of the present disclosure may be readily utilized to manage distribution of non-agricultural products, such as medical supplies, electronics, or other types of products that may experience fluctuations in demand.

As shown in FIG. 1, the demand sensing network 100 includes a demand management device 110. The demand management device 110 includes one or more processors 112 and a memory 114. Each of the one or more processors 112 may be a central processing unit (CPU) or other computing circuitry (e.g., a microcontroller, one or more application specific integrated circuits (ASICs), and the like) and may have one or more processing cores. The memory 114 may include read only memory (ROM) devices, random access memory (RAM) devices, one or more hard disk drives (HDDs), flash memory devices, solid state drives (SSDs), other devices configured to store data in a persistent or non-persistent state, or a combination of different memory devices. The memory 114 may store instructions 116 that, when executed by the one or more processors 112, cause the one or more processors 112 to perform the operations described in connection with the demand management device 110. The demand management device 110 also includes a supply/demand matching engine 118. In an aspect, the supply/demand matching engine 118 may be stored as part of the instructions 116. Exemplary operations of the supply/demand matching engine 118 are described in more detail below.

In FIG. 1, a plurality of DLT nodes are shown communicatively coupled to the demand management device 110 via a network 170. Each of the DLT nodes 130, 140, 150, 160 may correspond to different supply chain participants. To illustrate, the DLT nodes may include retailers/franchisees nodes 130, producers/manufacturers nodes 140, distribution/logistics providers nodes 150, and wholesaler/franchisers nodes 160. Each of the producers/manufacturers nodes 140 may be associated with producers or manufacturers of products; each of the distribution/logistics provider nodes 150 may be associated with entities that transport the products within the supply chain, such as to pick up products produced by the producers/manufacturers and deliver them to other supply chain participants; each of the wholesaler/franchiser nodes 160 may be associated with wholesalers (e.g., Sam's Club, Costco, etc.) or franchisors (e.g., McDonald's, Chick-Fil-A, etc.) who may manage distribution of franchise products to franchisees (e.g., entities operating franchise locations associated with the franchisors); and each of the retailers/franchisees nodes 130 may correspond to entities that sell products to consumers (e.g., grocery stores, franchise locations of restaurants, gas stations, and the like). It is noted that wholesalers and retailers may include brick and mortar retailers or e-merchants.

The DLT node(s) 130 (e.g., retailer/franchisee DLT node(s)) may include one or more processors 132 and a memory 134. Each of the one or more processors 132 may be a CPU or other computing circuitry (e.g., a microcontroller, one or more ASICs, and the like) and may have one or more processing cores. The memory 134 may include ROM devices, RAM devices, one or more HDDs, flash memory devices, SSDs, other devices configured to store data in a persistent or non-persistent state, or a combination of different memory devices. The memory 134 may store instructions 136 that, when executed by the one or more processors 132, cause the one or more processors 132 to perform the operations described in connection with the DLT nodes of retailers or franchisees. The memory 134 may store demand data 138 for the corresponding entity (e.g., a retailer or franchisee). To illustrate, the demand data 138 may include information representative of demand for products as experienced by the retailer/franchisee.

The DLT node(s) 140 (e.g., producer/manufacturer DLT node(s)) may include one or more processors 142 and a memory 144. Each of the one or more processors 142 may be a CPU or other computing circuitry (e.g., a microcontroller, one or more ASICs, and the like) and may have one or more processing cores. The memory 144 may include ROM devices, RAM devices, one or more HDDs, flash memory devices, SSDs, other devices configured to store data in a persistent or non-persistent state, or a combination of different memory devices. The memory 144 may store instructions 146 that, when executed by the one or more processors 142, cause the one or more processors 142 to perform the operations described in connection with the DLT nodes of producers and manufacturers. The memory 144 may store production data 148 for the corresponding entity (e.g., a producer or manufacturer). To illustrate, the production data 148 may include information representative of products produced by the manufacturer or producer.

The DLT node(s) 150 (e.g., distribution/logistics provider DLT node(s)) may include one or more processors 152 and a memory 154. Each of the one or more processors 152 may be a CPU or other computing circuitry (e.g., a microcontroller, one or more ASICs, and the like) and may have one or more processing cores. The memory 154 may include ROM devices, RAM devices, one or more HDDs, flash memory devices, SSDs, other devices configured to store data in a persistent or non-persistent state, or a combination of different memory devices. The memory 154 may store instructions 156 that, when executed by the one or more processors 152, cause the one or more processors 152 to perform the operations described in connection with the DLT nodes of distribution and logistics providers. The memory 154 may store transport data 158 for the corresponding entity (e.g., a distribution or logistics provider). To illustrate, the transport data 158 may include information representative of transportation of products by the distributor or logistics provider. For example, the producer or distributor may capture information at various points during transit of products from the producers, such as upon picking up the product from a shipper, changing a transport vehicle (e.g., from one type of truck to another, etc.) or transportation method (e.g., from truck to rail, truck to air, etc.), delivering the product to a destination, or other points involved in the transportation of the product.

The DLT node(s) 160 (e.g., wholesaler/franchiser DLT node(s)) may include one or more processors 162 and a memory 164. Each of the one or more processors 162 may be a CPU or other computing circuitry (e.g., a microcontroller, one or more ASICs, and the like) and may have one or more processing cores. The memory 164 may include ROM devices, RAM devices, one or more HDDs, flash memory devices, SSDs, other devices configured to store data in a persistent or non-persistent state, or a combination of different memory devices. The memory 164 may store instructions 166 that, when executed by the one or more processors 162, cause the one or more processors 162 to perform the operations described in connection with the DLT nodes of wholesalers and/or franchisers. The memory 164 may store demand data 168 for the corresponding entity (e.g., a wholesaler or franchiser). To illustrate, the demand data 168 may include information representative of demand for products as experienced by the wholesaler or franchiser. In some aspects the demand data 168 may include demand information associated with providing product to retailers or franchisees, such as distributing products from a franchisor to a franchisee. In additional or alternative aspects, the demand data 168 may include information associated with demand for products sold by the wholesaler or franchisor. For example, in addition to supplying product to retailers, a wholesaler may also sell products directly to consumers and the demand data 168 may capture demand attributable to both sources of demand.

The demand management device 110 may be configured to receive the supply chain data (e.g., the demand data 138, the production data 148, the transport data 158, and the demand data 168) from the DLT nodes 130, 140, 150, 160 and analyze the supply chain data via the supply/demand matching engine 118 (hereinafter referred to as "the matching engine 118"). The matching engine 118 may be configured to use portions of the supply chain information to provide different types of functionality to participants in the supply chain (e.g., the producers, manufacturers, wholesalers, logistics providers, distributors, retailers, franchisers, franchisees, and the like). For example, the matching engine 118 may utilize the supply chain data to identify new distribution channels for producers and/or retailers, recommend distributors or logistics providers to serve different distribution channels (e.g., transport product(s) between the producers and different participants to the supply chain), provide feedback to producers regarding production rates based on demand from supply chain participants, provide retailers or product sales outlets of the supply chain with information about product supply availability, or other types of functionality that may improve the way that products are produced, transported, and sold within a supply chain, as described in more detail below. In some aspects, the feedback generated by the matching engine 118 may also be used to inform a producer, distributor, wholesaler, or other entity regarding which orders should be filled. For example, a producer's production capabilities may enable a quantity of product to be produced (e.g., 10,000 boxes of cereal per day). Given the semi-fixed production capacity (e.g., production capacity can be scaled higher with addition of more equipment) of the producer, the feedback may be used to identify orders associated with retailers that are more likely to sell out of stock. In this manner, the feedback may be used to more intelligently fulfill orders in a manner that prevents shortages from occurring while ensuring that all orders are filled in a timely fashion.

As briefly described above, the functionality provided by the matching engine 118 may include providing feedback to producers/manufacturers regarding demand for the products they produce. To generate the feedback, the matching engine 118 may analyze the supply chain data to determine current demand (e.g., demand at the time the supply chain data is analyzed) or forecasted demand (e.g., predicted demand at a future period of time). The matching engine 118 may determine the current or forecasted demand based on at least a portion of the supply chain data (e.g., the production data 148 and the demand data 138, 168) obtained from the nodes 130, 140, 160 or another source of information indicative of demand. To illustrate, the demand data 138, 168 may provide the matching engine 118 with information about historical demand for a current or future period of time (e.g., a calendar year, a quarter, a month, a week, a day, or some other period of time), information about current quantities of a product on-hand at different entities, or other types of information that may be used to determine or forecast demand for a product for the period of time. In addition to analyzing demand data 138, 168, the matching engine 118 may also analyze production data 148. For example, the production data 148 may provide the matching engine 118 with information about production rates for the product (e.g., quantities produced that are yet to be sold, current or planned production rates, etc.).

Using the demand data 138, 168 and the production data 148, the matching engine 118 may identify instances where demand from the retailers is higher than current or planned production or situations where current or planned production is lower than current or forecasted demand from the retailers. The information derived from the supply chain data by the matching engine 118 may be used to generate and transmit feedback to the producer, such as to provide information about changes to product demand that may enable the producer or manufacture to respond to the demand changes appropriately (e.g., increase production, decrease production, maintain current production rates, etc.) so as to more efficiently manufacture products. To illustrate, based on the feedback provided by the matching engine 118, a producer may ramp up production of the product to meet increasing demand, maintain a steady or current rate of production but operate with less reserve stock of the product in order to meet sudden spikes in demand (e.g., deplete reserve stock temporarily to deliver quantities of the product consistent with the spike in demand and then replenish the reserve stock to a desired level as the demand lessens), ramp down production in response to decreasing demand, or a combination of these different operations (e.g., ramp up production of products experiencing increases in demand and simultaneously ramp down production of products experiencing decreases in demand). It is noted that operations to modify production based on changes to demand for a product have been provided for purposes of illustration and that DLT nodes deployed in accordance with the concepts disclosed herein may provide additional types of functionality and operations to dynamically support and respond to changes in a supply chain ecosystem, as described and illustrated in more detail below. It is also noted that the feedback may be provided to the producer or manufacturer automatically in real-time or near-real-time (e.g., within seconds of new supply chain data being received subject to network throughput limitations), periodically (e.g., sending supply chain status or demand for a product one or more times per day, week, month, or according some other timeframe), or providing feedback on-demand (e.g., upon receiving a request from the producer or manufacturer).

In addition to utilizing the supply chain data provided by the retailer nodes 130 and the producer nodes 140, the matching engine 118 may also be configured to utilize information received from other supply chain participants, such as the distributors and logistics providers corresponding to the DLT nodes 150 and the wholesalers and franchisers corresponding to the DLT nodes 160 to provide enhanced functionality to the supply chain participants. For example, the DLT nodes 150 associated with the distribution and logistics providers may store transport data 158 that provides information regarding the location of products being transported within the supply chain. The location information may be provided to the matching engine 118 in real-time as it is captured (e.g., location information may be provided upon scanning a barcode or other identification device/mark or manual input as different transportation events occur), periodically, or may be accessible to the matching engine 118 on-demand. The location information for transport of different products may be stored at the DLT nodes 150 of corresponding distributors or logistics providers. As demand changes within the supply chain, the matching engine 118 may evaluate the demand and supply for a particular product and determine whether to provide feedback regarding modifications to the transport and supply of the particular product within the supply chain.

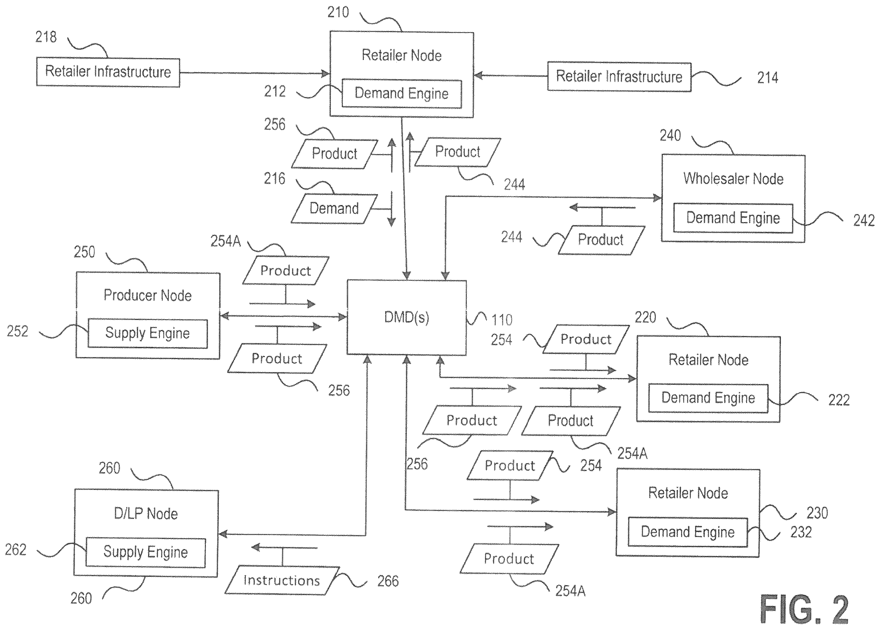

For example and referring to FIG. 2, a block diagram illustrating exemplary operations for routing products in a demand sensing network in accordance with embodiments of the present disclosure is shown. In FIG. 2, the demand management device node 110 of FIG. 1 is shown in communication with retailer nodes 210, 220, 230, a wholesaler node 240, a producer node 250, and a distribution and logistics provider node 260. Each of the retailer nodes 210, 220, 230 may be configured in accordance with the retailer node(s) 130 of FIG. 1; the warehouse node 240 may be configured in accordance with the wholesaler node(s) 160 of FIG. 1; the producer node 250 may be configured in accordance with the producer node(s) 140 of FIG. 1; and the distribution and logistics provider node 260 may be configured in accordance with the distribution and logistics provider node(s) 150 of FIG. 1.

As shown in FIG. 2, the retailer node 210 may be communicatively coupled to retailer infrastructure 214. The retailer infrastructure 214 may include various components (e.g., point of sale (POS) devices, inventory management systems (IMSs), etc.) configured to capture and compile information regarding operations of a retailer corresponding to the retailer node 210, such as inventory data, sales data, spoilage data, shrinkage data, and the like. The inventory data may include information about quantities of product on hand at one or more retail locations operated by the retailer as well as quantities of the product stored at warehouse or fulfillment facilities of the retailer. The sales data may include information about sales of products at the retailer's one or more brick-and-mortar retail locations, online sales via e-commerce sites of the retailer, or other sales channels of the retailer. The spoilage data may provide information about products that have been lost due to natural causes (e.g., produce that has gone bad, products that are past their expiration date, etc.) and the shrinkage data may provide information about products that have been lost due to other causes (e.g., products that have been stolen). It is noted that the exemplary types of information described above have been provided for purposes of illustration, rather than by way of limitation and that retailer nodes of embodiments may be configured to capture additional types of information from the retailer infrastructure 214 depending on the particular configuration of the retailer node 210 and the operations of the retailer. Moreover, it is to be appreciated that the specific examples of retailer infrastructure components described above have been provided for purposes of illustration, rather than by way of limitation and that aspects of the present disclosure may be utilized in connection with additional or other types of retailer infrastructure depending on the particular needs and configuration of each retailer's system.

In some aspects the retailer node 210 may be configured to receive information from multiple instances of the retailer infrastructure 214. For example, as shown in FIG. 2 the demand engine 212 may be communicatively coupled to retailer infrastructure 218, which may include the or different components than the retailer infrastructure 214, and may receive additional information compiled by the retailer infrastructure 218. The different instances of retailer infrastructure may correspond to different brick-and-mortar locations of a retailer (e.g., retailer infrastructure 214 may correspond to a first brick-and-mortar location and retailer infrastructure 218 may correspond to a second brick-and-mortar location), one or more fulfillment centers supporting e-commerce sales of the retailer associated with the retailer node 210 (e.g., retailer infrastructure 214 may correspond to a first fulfillment center supporting e-commerce operations of the retailer and retailer infrastructure 218 may correspond to a second fulfillment center supporting e-commerce operations of the retailer), or a combination of brick-and-mortar locations and fulfillment centers (e.g., retailer infrastructure 214 may correspond to a brick-and-mortar retail location and retailer infrastructure 218 may correspond to a second fulfillment center supporting e-commerce operations of the retailer).

At least a portion of the information compiled by the retailer infrastructure 214 may be provided to a demand engine 212 of the retailer node 210. The demand engine 212 may use the compiled information to determine demand for one or more products offered for sale by the retailer associated with the retailer node 210. For example, the demand engine 212 may be configured to determine the number of units of a product sold by the retailer at different ones of the retailer locations, a number of units of the product lost (e.g., due to spoilage and/or shrinkage) at the retailer at different ones of the retailer locations, and other types of information indicative of quantities of the product that have been purchased by consumers or have been lost to other causes. Over a period of time such information may provide information about historical quantities of the product that are purchased by consumers, which may provide insights into seasonal spikes in demand for certain products (e.g., the July 4th holiday may correlate to an increase in purchases of certain meat products popular for cookouts) and periods of time where demand historically drops (e.g., reduced sales of certain products, such as sweets, at the start of a new year). Additionally, the demand engine 212 may be configured to obtain information about on-hand quantities of the product at each of the retailer locations, such as quantities of the product stored in back of the retail locations or on the shelves, and/or quantities of the product available at warehouse or storage facilities used by the retailer to store the product.

The demand engine 212 may be configured to analyze the information derived from historical (and real-time) sales information to determine a demand for the product. The demand engine 212 may also determine whether the on-hand quantities of product are sufficient to meet the demand for the product. In some aspects, the demand engine 212 may be configured to simply obtain relevant portions of the compiled information and then provide that information to a demand engine of the demand management device 110, rather than actually determining the demand. In an additional or alternative aspect, both the demand engine 212 and the demand engine of the demand management device 110 may determine demand information (e.g., the demand engine 212 may perform local analysis of the data to determine the demand according to policies of the retailer while the demand engine of the demand management device may determine the demand based on policies configured for the demand management device). If the demand engine 212 (or the demand engine of the demand management device 110) determines that the on-hand quantities of the product are insufficient to meet the demand, the demand engine 212 may transmit demand information 216 to the demand management device 110.

As explained above, the demand management device 110 may be configured to initiate operations to determine dynamic modifications to the supply chain configured to address the changing demand for the product(s). For example, demand management device 110 and more specifically, the matching engine 118, may determine sources of supply for a product, such as a product 244, sold by the retailer associated with the retailer node 210. In the example shown in FIG. 2 the matching engine of the demand management device 110 may determine that an entity associated with the wholesaler node 240 may have a quantity of the product 244 on hand sufficient to partially or completely satisfy the demand being experienced by the retailer.

The determination that the wholesaler has sufficient quantities of the product may be based on information (e.g., the demand data 168) received from a demand engine 242 of the wholesaler node 240. To illustrate, the matching engine may receive information about an on-hand quantity of the product 244 at the wholesaler, information that includes or may be used to determine the demand for the product 244 at the wholesaler, or other types of information and may determine the on-hand quantity of the product 244 is sufficient to meet the wholesaler's current or forecasted demand. By taking into account the demand at the wholesaler, the matching engine may avoid merely shifting the product 244 to the retailer and creating a lack of supply of the product 244 at the wholesaler. It is noted that the demand engine 242 may provide functionality similar to the demand engine 212, such as to track and monitor various metrics associated with products sold by the wholesaler and providing all or a portion of the compiled information about the operations of the wholesaler to the matching engine of the demand management device, as described above with respect to the retailer node 210.

Upon determining the wholesaler has sufficient quantities of the product to satisfy the retailer's demand (and current or forecasted demand of the wholesaler), the matching engine may initiate operations to transfer a quantity of the product 244 from the wholesaler to the retailer. In one non-limiting example, the transfer operations may include transmitting an authorization request to the wholesaler to verify that the wholesaler would like to sell the product 244 to the retailer and upon confirmation that the wholesaler would like to sell the product 244 to the retailer, a notification to the retailer node that indicates additional quantities of the product 244 are available. In some aspects the matching engine may first confirm the retailer authorizes the purchase from the wholesaler prior to confirming whether the wholesaler authorizes the sale based on the authorization message. In an aspect, the notification may indicate that the availability of the product 244 is via a new supply channel. For example, the retailer may traditionally purchase the product 244 from a different wholesaler or a producer and the notification may indicate that a new supply channel is available. The retailer node 210 may then transmit a response to the notification to the demand management device 110. The response may indicate whether the retailer would like to purchase all or a portion of the product 244 available from the wholesaler. If the response includes an indication that the retailer would like to purchase the product 244 from the wholesaler, the demand management device 110 may submit an order to the wholesaler for the purchase of the product and transmit instructions 266 to the logistics provider node 260. The instructions 266 may include information that instructs the logistics provider to pick up the quantity of the product 244 from the wholesaler at a first location (e.g., a point of origin) and deliver it to one or more second locations (e.g., one or more destinations) operated by the retailer associated with the retailer node 210. In addition to including point of origin and destination information, the instructions 266 may also indicate a pick-up time, a desired delivery date (e.g., a date when the product should be delivered to the retailer), a level of service (e.g., overnight delivery, next day deliver, and the like).

In situations where the wholesaler (or another supply chain entity) does not have sufficient quantities of the product 244 to completely fulfill the demand of the retailer the matching engine may seek additional sources for the product. For example, the matching engine may determine that a retailer associated with the retailer node 220 has quantities of the product 244 to completely or partially fill the demand of the retailer. The matching engine may follow a process similar to the process described above to arrange for pick-up of at least a portion of the product 244 (e.g., any portion remaining when the wholesaler does not have sufficient quantities to completely fulfill the demand of the retailer) from the retailer associated with the retailer node 220 and to arrange delivery of the product 244 to the retailer associated with the retailer node 210. It is noted that embodiments of the present disclosure may utilize any number of sources for a product to fulfill the needs of a retailer (or other supply chain participant) and that FIG. 2 has been described as using up to two alternative sources for purposes of illustration, rather than by way of limitation.

It is noted that where multiple sources for a product are identified by the matching engine, the notification(s) transmitted to the retailer node 210 may indicate whether any one of the sources can completely fulfill the demand or only partially fulfill the demand. In this manner the retailer node may provide a response that indicates the demand should be fulfilled from one of the additional sources, multiple ones of the available sources (e.g., if one of the sources can fulfill the entire demand of the retailer), or none of the additional sources. To illustrate, the notification of the additional sources may include information associated with the cost of acquiring the product 244 from the alternative source(s). If the cost is higher at one of these sources the retailer node 210 may determine to at least partially fulfill the demand from among the cheapest of the identified alternative sources. In an aspect, notifications transmitted to supply chain participants regarding additional sources for a product may indicate a quantity of the product available from each source, which may be determined by the matching engine using information provided by a DLT node corresponding to each additional source for the product(s). Where the alternative source chosen by the retailer node 210 cannot completely fulfill the demand, the retailer node 210 may indicate whether the remaining demand should be fulfilled from the other source(s) (e.g., the more expensive source), should not be fulfilled at all (e.g., because the price of the product 244 from the alternative source is too high or other reasons), or at least not fulfilled until a later time, such as when the producer can provide the product to the retailer or a cheaper alternative source of the product 244 can be located by the matching engine.

While the exemplary operations described above illustrate techniques to identify new distribution channels for sourcing a product within a supply chain from wholesalers or franchisers, the demand management device 110 may also aid producers and manufacturers with identification of new distribution channels for bringing products to consumer-facing outlets (e.g., retail locations, franchisee locations, or other locations where consumers are able to purchase products or services). For example, the producer associated with the producer node 250 may have an established distribution channel to the retailer associated with the retailer node 230. The producer may provide a product 254 to the retailer associated with the retailer node 230 using this distribution channel (and assistance from a distributor or logistics provider), and the retailer may then sell the product 254 to its customers. As described above, information compiled by the retailer node 230, such as information about demand for products at the retailer, on-hand quantities of the products, and the like, may be used to determine a demand for the product and whether the on-hand quantities of the product that the retailer has are sufficient to meet the demand. If the demand for the product 254 at the retailer currently or may soon exceed quantities of the product 254 available to the retailer, a quantity of the product 254 sufficient to meet the demand may be determined by either the retailer node 230 or by the demand management device 110. The quantity of the product needed to meet the current or forecasted demand may be communicated to the producer node 250 directly (e.g., the retailer node 230 may transmit a nofication of the quantity to the producer node 250) or indirectly (e.g., the retailer node 230 may transmit a nofication of the quantity to the demand management device 110 that may then forward the notification to the producer node 250). In some aspects, the quantity of the product indicated to the producer may be determined by the matching engine of the demand management device 110 based on the demand and the on-hand quantities of the product 254 retailer has. In additional or alternative aspects, the demand engine 232 of the retailer node 230 may determine the additional quantities of the product 254 needed to meet expected demand. Regardless of whether the quantities of product needed to meet the demand are provided directly or indirectly, the demand maangement device 110 may provide information to the logistics provider via the logistics provider node 260 to arrange for transportation of the product from the producer to the retailer.

While the description above regarding the relationship between the producer corresponding to the producer node 250 and the retailer corresponding to the retailer node 230 represents an existing and ongiong supply chain relationship, the demand management device 110 may also be configured to aid supply chain participants in establishing new supply chain distribution channels. For example, a retailer associated with the the retailer node 220 may sell a product that is equivalent to the product 254 but is produced by a different producer than the producer corresponding to the producer node 250. Since the product is not produced by the producer of the product 254 a channel between the producer associated with the producer node 250 and the retailer corresponding to the retailer node 220 may not be established. The retailer selling the equivalent product may encounter a situation where an additional quantity of the equivalent product (e.g., due to increased demand like the example above regarding the retail node 230) is needed. In that situation the retailer node 220 may seek to acquire additional quantities of the equivalent product from its producer using the techniques described above. If the producer is not be able to fulfill the request for additional quantities of the equivalent product (e.g., due to production limitations, limited supply of materials needed to produce the equivalent product, or other reasons), a producer node associated with the producer may indicate to the demand management device 110 (or the retailer node) that the request for additional quantities of the equivalent product cannot be fulfilled.

When a producer cannot fullfill a retailer's need for additional quantities of a product, the demand management device 110 may seek to determine whether other supply chain participants have excess quantities of the product, as described above. Additionally, the demand management device 110 may determine whether alternative products that are equivalent to the requested product are available. In this example, the demand management device 110 may determine that the producer corresponding to the producer node 250 produces a product (e.g., the product 254A) that is equivalent to the product requested by the retailer node 220 and may transmit a notification to the retailer that requests confirmation or approval to fulfill the demand using the product 254A. The retailer node 220 may respond to the notification from the demand management device 110 with an indication that fulfilling the demand using quantities of the product 254 is authorized or not authorized. When not authorized, the demand management device 110 may determine whether additional sources of the equivalent product 254A or the product 254 are available, such as from wholesalers, other retailers, and the like, as described above. Using such techniques may enable supply chain participants to discover new products and sources for those products within a supply chain, which may enable retailers, producers, and other supply chain participants to more readily respond to sudden changes in demand, such as the artificial shortages that occurred at the start of the pandemic in the United States with respect to certain products (e.g,. produce and other grocery items).

In addition to identifying sources of products and new supply chain channels and relationships, the demand management device 110 may also provide functionality for dynamic routing of products within a supply chain. For example, suppose that retailer node 220 is associated with a restaurant or chain of restaurants and that retailer node 210 is associated with a grocery store or chain of grocery stores. The restaurant(s) associated with the retailer node 220 may source a product 256 from the producer associated with the producer node 250, as shown in FIG. 2. Deliveries of the product 256 from the producer to retailers, such as the restaurant associated with the retailer node 220, may be facilitated by the logistics provider associated with the logistics provider node 260. Now suppose that a sudden and significant drop in the demand for the product 256 occurs at the restaurant (e.g., due to a reduced capacity requirement imposed on the restaurant or a shutdown) but a shipment of the product 256 in a quantity based on demand prior to the drop is already in transit.

The demand management device 110, or more specifically the matching engine, may detect the sudden drop in demand at the restaurant (e.g., based on information provided to the matching engine) and may initiate operations to identify one or more potential retailers that may be able to utilize all or a portion of the in-transit quantity of the product 256. In this example the matching engine may determine that the retailer associated with the retailer node 210 has sufficient demand for the product 256 and may initiate operations to re-route all or a portion of the in-transit quantity of the product 256 destined for the restaurant to the retailer. In an aspect, rerouting operations may include transmitting a notification to the retailer node 210 indicating that a quantity of the product 256 is available and receiving an acceptance response or denial response from the retailer node 210. The acceptance response may indicate that re-routing the product to the retailer is approved and the denial response may indicate that the re-routing should not be performed. When the re-routing is approved, the matching engine may transmit re-routing instructions to the logistics provider node 260 that identify the shipment of the product 256, a quantity of the shipment that is to be re-routed (e.g., all of the product of just a portion), a destination for the re-routed shipment, or other types of information.

Upon receiving the re-routing instructions the logistics provider node 260 may then notify a driver of the re-routed shipment so that the driver only delivers a portion of the product 256 to the restaurant (e.g., if only a portion of the product 256 is re-routed) or does not deliver any of the product to the restaurant and instead only delivers the product 256 to the retailer (e.g., if all of the product is re-routed). Where all or a portion of the shipment of the product 256 is re-routed the logistics provider node 260 may determine whether to alter a route of the driver. For example, the driver may have more than one product scheduled for delivery to the restaurant and so the driver may still need to visit the restaurant to deliver the product(s), but may not deliver the product 256. Upon determining to re-route the shipment entirely or partially, the logistics provider node 260 may determine an optimized delivery route for the driver and may transmit details regarding the optimized delivery route to the driver.

As shown above and illustrated in FIG. 2, aspects of the present disclosure enable various operations that improve how systems of participants in a supply chain communicate and exchange information. For example, operations of embodiments enable participants to a supply chain to dynamically respond sudden increases or decreases in demand via a matching engine of a DLT node (e.g., the demand management device 110), as described above with respect to the example involving the product 244 and the retailer node 210. The operations of the various DLT nodes also establish a network that can dynamically and autonomously (i.e., without human intervention) identify new distribution channels and sources for products when existing sources and channels are unable to adequately supply products sufficient to meet demand. Moreover, the dynamic operations of the DLT nodes also enable products to be redirected during transport based on changing demand for the products. Such capabilities are particularly useful with respect to products that are subject to spoilage, such as produce or other food products that may have a limited shelf life. This new capability for supply chains may enable such products to be re-directed from sources with sudden or sustained drops in demand to supply chain outlets where the products can be provided to consumers in a manner that prevents unnecessary loss of the product or other negative impacts.

Referring back to FIG. 1, in an aspect permissions may be used to facilitate the various operations described above. The permissions may be configured by each of the different DLT nodes to control how information is shared, with which DLT nodes information is shared, to automate certain operations within the supply chain, or other types of controls and functionality. For example, permissions for the DLT nodes 150 may enable sharing of the transport data with producers/manufacturers, such as to allow producers or manufacturers to track their products while in transit to a purchaser (e.g., a retailer, a warehouse, a wholesaler, and the like). The permissions may also enable the tracking data to be monitored by the demand management device 110 during transport of products from a point of origin to a destination. By using permissions to control sharing of transport data with the demand management device 110 the producer or manufacturer may prevent rerouting of shipped products. To illustrate, where the location information is not shared the demand management device 110 may not see the quantity of a product currently in transit from the origin to the destination when determining available stock of a product. Similarly, where the permission data authorizes the location information to be shared, the demand management device 110 may seek to re-route shipped products as described above with respect to FIG. 2.

In some aspects, the permissions for a retailer node may be configured to control whether current or forecasted demand is calculated by the demand management device 110 or a DLT node of the retailer, franchisee, wholesaler, franchiser or another entity. To illustrate, the permissions of a retailer node may authorize the demand management device 110 to perform demand calculations while in other aspects the permissions of the retailer node may not authorize the demand management device 110 to perform demand calculations. Such capabilities may allow retailers or other customer-facing participants in a supply chain to control how their demand is perceived by the demand management device 110 and may enable entities to deploy proprietary demand calculations without risking the specific ways in which the demand is calculated being disclosed to third parties, such as by configuring the permissions to require a DLT node of the retailer to perform the demand calculations. In situations where the permissions enable demand or other information to be shared and utilized by third party nodes (e.g., to calculate demand or other information), such as the demand management device 110, the permissions may also specify the types of data that may be shared and the permissions specify whether any masking of the data should be utilized. Masking of the data may involve removing price information or other data, altering price information (e.g., if the specific price charged by the retailer is $1.50 the shared data may be a range, such as $0 - $5, or simply a NULL value), or other types of operations to prevent use of potentially sensitive data.

The masking operations may also be used to hide certain information from some entities within the supply chain while allowing that information to be shared with other entities within the supply chain. For example, suppose that a grocery store (e.g., a retailer) sold a product and was in need of additional quantities of that product. The DLT node associated with the grocery store may transmit information that identifies the product and the producer of the product (e.g., the grocery store may stock a particular producer's version or brand of the product) when transmitting information to the demand management device 110. The demand management device 110 may have permission to share a portion of the information shared by the grocery store, such as the description of the product (e.g., corn flake cereal), but not other portions of the information shared with the demand management device 110, such as the brand of corn flake cereal the grocery store carries. Leveraging permissions to share information in this manner may enable the demand management device 110 to obtain sufficient information to learn what specific product a supply chain participant uses or sells, which may enable the demand management device 110 to identify quantities of the specific or actual product available within the supply chain and equivalent. To illustrate, the demand management device 110 may determine the quantities of the actual product (e.g., the product produced by the brand/supplier of the grocery store) using the shared information and may use that information to communicate with or exchange information with the producer of the actual product. Similarly, the demand management device 110 may use the product description data (or other information shared with the demand management device 110) to identify products equivalent that are equivalent to the product sold by the grocery store. For example, suppose that the grocery store sells a corn flake cereal produced by a first producer but that corn flake cereal (e.g., the product) may be manufactured by many different producers. The demand management device 110 may identify the corn flake cereal from other producers as an equivalent product and may communicate with those other producers to procure a quantity of the equivalent product for the grocery in the event the product manufactured by the first producer is unavailable, but the identity of the grocery store may be masked, such as to just indicate a generic entity (e.g., grocer 1) or to not identify the entity at all. Moreover, when communicating with producers of equivalent products the demand management device may not identify the particular brand used by the grocery store and may instead merely refer to the product using the description information.

In addition to specifying the types of data that may be shared and/or whether masking operations should be used, the permissions data may also specify whether data shared with an entity may be shared with a third party. For example, when a product is being transported the logistics provider or the producer may specify whether the location of the product can be shared with a third party, such as the entity associated with the destination of the product or the demand management device 110. Similarly, permissions configured by the producer/manufacturer node(s) 140 may enable producers and manufacturers to share production data with other entities in the supply chain.

In an aspect, the matching engine 118 may maintain the permission data that identifies sharing permissions for exchanging supply chain data between a plurality of supply chain participants in the demand sensing network. For example, retailers/franchisees may set permissions that enable their respective demand data to be shared with certain producers/manufacturers but not others. This may enable the retailers/franchisees to control who is provided access to their demand data. For example, franchisees may purchase certain products through a corresponding franchisor associated with one of the DLT nodes 160 but other products may be acquired from producers/manufacturers. The permission data may enable a franchisee to share demand data for products to be purchased through the franchiser with the franchiser node 160 but not share demand data for products that are not purchased through the franchiser-instead, demand for those products may be shared with the respective producers of those products. Sharing information in this manner may enable producers to more efficiently determine whether current production rates are sufficient to meet the demand of the consumer-facing outlets within the supply chain for the products each producer generates. Similarly, the demand data for the franchiser may be shared with producers and manufacturers and may be generated based at least in part on the demand data of the corresponding franchisees (e.g., as the demand for franchisees changes, the demand data for the franchiser may be updated based on shared demand data from the franchisees). Also, the franchiser may share certain demand data with a first producer or manufacturer (e.g., a farmer that grows potatoes used to produce French fries) but not share other demand data (e.g., demand data related to beef used in other food products sold by franchisees of the franchiser) with the first producer or manufacturer.

In addition to providing capabilities to configure permissions that enable sharing of data between different supply chain participants, the demand management device 110 may also enable permissions to be revoked. For example, a retailer may have a relationship with a producer whereby the retailer sells the producer's product(s). During the term of that relationship the producer may have permissions that enable data of the producer to be shared with the retailer and the retailer may have permissions that enable data of the retailer to be shared with the producer. However, the relationship may be terminated (e.g., because the retailer no longer wishes to sell the producer's product(s) or the producer no longer wishes to supply the product to the retailer, or other reasons) and upon termination of the relationship, the two parties may revoke all or a portion of the permissions that enable sharing of information of the retailer and/or the producer. It is noted that permissions may also be revoked for other reasons. To illustrate, the retailer may sell multiple products of the producer and may initially configure permissions to share demand data with the producer, but may subsequently stop selling one of the products. When the retailer stops selling the product, the retailer may stop sharing some of the demand data with the producer. It is noted that the retailer may start selling a product that is equivalent to the one that the producer manufactured. Thus, the retailer may still have demand for the product formerly provided by the retailer but may not share that demand data with the producer since the retailer is selling the equivalent product produced by a different producer. The ability to revoke permissions may enable different supply chain participants to have greater control over how their data is utilized to promote efficient operations within a supply chain.

In addition to providing capabilities that allow the demand management device 110 to perform real-time or near-real-time demand analysis with respect to products within a supply chain and providing functionality to control or coordinate allocation and transportation of products within the supply chain, the demand management device 110 may also be configured to perform operations for optimizing production of products. For example, the matching engine 118 may be configured to analyze demand and production data to control replenishment management operations within the supply chain. The replenishment management operations may include determining a change to the production rate of the product, such as to reduce (or increase) the quantities of the product produced for a period of time. In connection with the change to the production rate, the matching engine 118 may transmit a notification to one or more supply chain participants (e.g., wholesalers/franchisors and/or retailers/franchisees) to suggest a reduced replenishment (e.g., delivery) of the product, such that the one or more supply chain participants receive smaller quantities of the product for a period of time, although the quantities may still be sufficient to meet expected or actual demand. The reductions to the replenishment quantities may limit excess quantities of the product within the supply chain and may enable supply chain participants to more efficiently manage and monitor excess inventory. For example, as explained above, excess inventory may be delivered to locations where sufficient demand exists, such as to relocate the product from one retailer location where the product may be sold more quickly. Such techniques may reduce spoilage or other types of waste in addition to efficiencies with respect to transportation and production of the product (e.g., it may be more efficient to deliver a quantity of a product from a location that has excess inventory available than to wait for production of a new quantity of the product).

As briefly described above, the matching engine 118 may be configured to provide functionality for rolling out one or more promotions. In an aspect the promotions may be configured to increase demand for the product, which may improve sales of a product through the supply chain over a period of time and help sell excess quantities of products or simply generate additional revenue. To illustrate, the matching engine 118 may analyze demand for one or more products within the supply chain and determine that a promotion may increase demand for one or more products. Upon determining the promotion may improve demand for the one or more products, the matching engine 118 may transmit a notification to appropriate supply chain participants (e.g., wholesalers/franchisors and/or retailers/franchisees) to inform the participants of the promotion. The particular supply chain participants to which the notification is transmitted may correspond to participants that are experiencing decreased demand or participants with excess on-hand quantities of the promoted product(s). The notification may indicate the terms of the promotion, which may enable the participants to roll out the promotion rapidly. The promotion may involve a change in the price of the product, a quantity promotion (e.g., buy one, get one free, etc.), or another type of promotion (e.g., buy product X get product Y for 50% off). It is noted that the ability to implement promotions quickly using the techniques disclosed herein may be particularly advantageous with respect to products that are subject to spoilage since those products may become unsellable if not sold prior to the products becoming spoiled.

In some aspects, the promotion notification may be provided to the appropriate one of the DLT nodes and the contents of the notification may configured to implement the promotion at the corresponding supply chain participant. For example, upon receiving the notification of the promotion, the retailer node 130 may update an enterprise resource planning system or other system to input a promotional price, a discount, promotion payment information (e.g., how a retailer can be reimbursed for the reduced sales price caused by the promotion, etc.) if desired, or other types of operations. Such changes may be configured to go live on a particular date (e.g., a start date of the promotion) and end on a particular date (e.g., an end date of the promotion). In an aspect, the matching engine 118 may be configured to transmit parameters associated with a determined promotion to a producer of the product(s) involved in the promotion and may only transmit the promotion to other supply chain participants in response to receiving an approval notice regarding the promotion from a DLT node of the producer. The producer may have an opportunity to review the promotion parameters proposed by the matching engine 118 and make modifications to the parameters, such as to change a discount amount (e.g., from 10% to 5% or from 15% to 20%) or to alter products involved (e.g., change the promotion from buy product X get product Y free to buy product X get product Z free). It is noted that while specific examples of the types of alternations that may be made to promotions have been described above, such examples are provided for purposes of illustration, rather than limitation and that additional types of alterations and modifications may be made using the concepts disclosed herein, such as to offer the promotion in more or less areas than proposed by the matching engine 118. Where the promotion parameters are provided to a producer (or another entity) for review and approval, the matching engine 118 may not transmit the promotion to supply chain participants unless the producer (or other entity) approves the promotion, thereby preventing the promotion from being implemented without approval of the producer or other entity that produces the product(s) involved in the promotion. It is noted that the permissions may include information that specifies whether promotions require approval or not, such that the producer may selectively control or forego control over promotions configured to improve demand for products.

The exemplary operations described above demonstrate how the demand sensing network 100 may leverage distributed ledger technology to maintain the privacy of data associated with different supply chain participants and allow that data to be shared in a controlled manner. The sharing of the data may enable actions to be determined to optimize distribution of products within the supply chain, such as to supply products to consumer-facing outlets in quantities commensurate with real-time demand, thereby resulting in a more efficient supply chain with minimal waste and excess inventory. Moreover, the DLT nodes leveraged by the demand sensing network 100 provide real-time end-to-end visibility into the demand and transport of products within the supply chain, which allows rapid action to be taken in response to changing demand.

As shown above, the various DLT nodes of the demand sensing network 100 provide improved supply system functionality through dynamic demand and supply chain distribution channel analysis. The analysis may be performed based on information between various ones of the DLT nodes. Moreover, permissions may be used to control what portions of the shared information are visible and/or shared with other supply chain participants. The permissions may also be used to provide functionality associated with automated re-routing of products through the supply chain in response to changes in demand. Such capabilities may enable products to be moved within a supply chain in a more efficient manner and may eliminate some of the artificial supply chain shortages that occurred at the beginning of the pandemic in the United States and elsewhere (e.g., when ample supply of a product existed but could not reach the consumer-facing outlets where demand was high).

It is noted that while the specific examples above have focused on delivery and routing of products from producers or manufacturers to customer-facing outlets (e.g., retailers and franchisees) as well as other intermediate supply chain participants (e.g., wholesalers and franchisers), aspects of the present disclosure are not limited to such techniques. This is because some producers or manufacturers may produce products that are then used by other producers or manufacturers to produce products. To illustrate, a farmer may grow wheat that may then be purchased by a producer of flour. The flour may then be provided to one or more other producers that use the flour to make various food products that may then be provided to retailers or other supply chain participants that sell those food products to consumers. Additionally, the flour itself may be provided to the retailers or other supply chain participants that then sell the flour to consumers. Regardless of the supply chain participants that are involved, the demand management device 110 may provide functionality similar to the functionality described above with reference to FIG. 2 to aid those supply chain participants in more efficiently managing how products are distributed in the supply chain. Moreover, because the functionality provided by the DLT nodes of the present disclosure may dynamically obtain data from the various participants in the supply chain, upstream issues may also be detected. For example, if an event (e.g., drought, flood, disease, etc.) causes a loss of a portion of a wheat crop the producer node associated with the producer of that wheat crop may inform downstream supply chain participants of the loss, which may signal a potential shortage of wheat. The ability to provide information to both upstream and downstream participants within a supply chain may help the supply chain participants to respond to significant events (e.g., the loss of a wheat crop, shutdowns of entities due to a pandemic, etc.) within the supply chain and ensure that products continue to flow to customer-facing outlets in an efficient manner.

In some aspects, operations of the demand sensing network 100 may be supported by one or more blockchains. For example, the demand sensing network 100 may include one or more public and/or private blockchains 180. The blockchains 180, whether public or private, may be utilized to support operations of the demand sensing network 100 and to record those operations in records on the blockchain(s) 180. To illustrate, a public blockchain may be provided to record supply and demand data in accordance with permissions configured by different participants of the demand sensing network, such as operators of the DLT nodes 110, 130, 140, 150, 160. As described above, such supply and demand data may be masked (e.g., altered, abstracted, etc.) in accordance with the permission data prior to being recorded onto the blockchain, such as to hide an identity of an entity having demand for a resource (e.g., a product, etc.) or a specific quantity that entity needs to meet the demand (e.g., the recorded data may specify a range, such as 1000-2000 units of the resource). Similarly, information identifying the entity or entities having a supply of that resource may be masked prior to that information being written to the blockchain (e.g., by the demand management device 110 or by one of the DLT nodes 130, 140, 150, 160 directly). The DLT nodes 110, 130, 140, 150, 160 may use the information recorded to the public blockchain(s) for various purposes. For example, the demand management device 110 may utilize the demand and supply data recorded to the blockchain to identify the entities having supply of resources that match demand being experienced by other entities. Once matches or potential matches (e.g., matches based on equivalent products analysis) are identified, the matching engine 118 may then perform operations to fulfill the demand from the available supply, as described above.

In some aspects, private blockchains may also be utilized. For example, demand management device 110 may maintain a private blockchain for recording information about specific transactions within the demand sensing network 100, such as data that identifies specific parties to a transaction (e.g., the entity receiving resources to meet demand and the entity supplying the resources), price or payment information, delivery or pickup locations, a logistics provider used to transport the resources to fulfill the demand, or other types of transaction specific information. Utilizing a private blockchain to record such transaction specific data may help reduce the likelihood that the information recorded to the blockchain is used inappropriately by third parties, such as to learn of an entity's pricing for different participants or locations where resources are picked up or delivered in order to gain a competitive advantage or other purposes. Access to the data recorded to the private blockchain may be restricted using the permissions configured for each entity. To illustrate, an entity that participated in a transaction recorded to the private blockchain may access the record of that transaction using a key or other types of permissions while that same entity may be prevented from accessing other transactions that the entity did not participate in. In an additional or alternative aspect, the sensitive or potentially sensitive information described above as being recorded to a private blockchain may be encrypted and written to the public blockchain, and keys to access the information may be provided to the participants. In some aspects, information pertaining to different entities may be encrypted using different encryption keys, thereby further restricting access to the information. For example, price information may be encrypted using a key that provides the seller and buyer with access to the price information, but the logistics provider that transported the resources from the seller to the buyer may not have access to the price information. Similarly, all parties may be provided a key to access information about the logistics provider, thereby enabling all parties to monitor the transportation of the resources.

As described above, smart contracts may also be used to support operations of the demand sensing network. In an aspect, the smart contracts 182 may be recorded to the blockchain(s) 180, such as to have a master smart contract recorded to a block of the blockchain and then an instance of the smart contract may be instantiated upon a particular action being implemented within the demand sensing network. The smart contracts 182 may include code configured to receive inputs, process or analyze the inputs, and perform actions based on the inputs, and generate outputs. To illustrate, demand and supply data may be received by the matching engine 118, either from one or more the DLT nodes directly or via accessing available supply data recorded on the blockchain, and the matching engine 118 may identify an entity have a supply of a resource that corresponds to demand within the demand sensing network. Upon identifying the supply entity and the demand entity, the matching engine 118 may instantiate an instance of the smart contract to begin the process of fulfilling the demand using the identified supply of the resource. In an aspect, the instance of the smart contract may be configured to provide notifications to the supply entity and the demand entity, such as to notify the demand entity of the available supply of the resource. The demand entity may respond to the notification by providing a digital signature to the smart contract, which may then initiate transmission of a notification to the supply entity to indicate that a buyer for the supply is available. The supply entity may then respond by providing a digital signature to the smart contract to indicate the supply entity agrees to supply the resource to the demand entity.

As described above, once a match is made, the matching engine 118 (or the functionality coded into the smart contract 182) may initiate operations to fulfill the demand from the available supply, such as to identify a logistics provider to transport the resources to the demand entity, provide routing instructions to the logistics provider (e.g., instructions regarding the pickup location and the destination(s)), or other types of information to enable the logistics provider to transport the resources to the appropriate destination. Additional signatures may also be provided to the smart contract, such as to indicate that the logistics provider has picked up the resources or delivered the resources. In some aspects, the smart contract may also be configured to handle payment information, such as to charge an account of the demand entity for the resources upon delivery (or upon receiving the digital signature indicating successful delivery), pay the supply entity, pay the logistics provider, or other types of financial transactions. It is noted that the exemplary operations described above have been provided for purposes of illustration, rather than by way of limitation and the smart contracts in accordance with aspects of the present disclosure may provide additional functionality as described elsewhere herein or as would be apparent to a person of ordinary skill in the art.

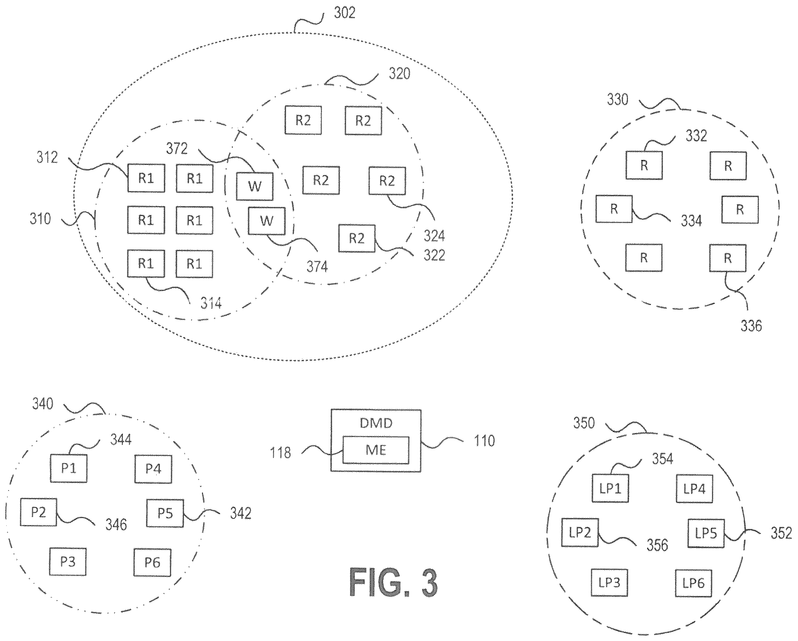

In addition to the above-described functionality and improvements to the way systems and devices of participants to a supply chain share and communicate information, aspects of the present disclosure also provide techniques to manage supply chain governance and to facilitate intelligent decision making with respect to actions within the supply chain. For example and referring to FIG. 3, a block diagram illustrating techniques for providing governance functionality within a supply chain ecosystem is shown. In FIG. 3, a plurality of retailers 310, a plurality of retailers 320, and a plurality of retailers 330 are shown. The plurality of retailers 310 includes multiple retailers (R1), such as retailers 312, 314; the plurality of retailers 320 includes multiple retailers (R2), such as retailers 322, 324; and the plurality of retailers 330 includes multiple retailers (R), such as retailers 332, 334, 336.

The plurality of retailers 310 and the plurality of retailers 320 may be independent but may form a set of related retailers 302. To illustrate, Wal-Mart Corporation operates Sam's Club stores and Wal-Mart stores. In such an environment, the company may have a network of warehouses 372, 374 that may service these different retail outlets. Using the techniques disclosed herein products may be distributed from the warehouses 372, 374 to the plurality of retailers 310, 320 according to sensed demand. Now suppose that the plurality of retailers 310 are located in a first geographic region (e.g., a particular city, county, state, etc.) and the plurality of retailers 320 are located in a second geographic region (e.g., a different particular city, county, state, etc.). The warehouse 372 may be situated at a location that is central to the first geographic region and the warehouse 374 may be situated at a location that is central to the second geographic region.

Such an arrangement is traditionally utilized on the premise that it will enable the retailer to store quantities of products that are sold at the various retail locations R1 and R2 in a manner that enables efficient distribution of products to the retail locations (e.g., to replenish stock at the retailer locations as sales are made). While the traditional approach of centralized warehouses may provide efficient distribution of products during times of steady demand, it may be insufficient to respond to sudden spikes in demand. To illustrate, a product may become out of stock at the plurality of retail locations 310 but not at the plurality of retail locations 320 or vice-versa due to an event (e.g., a weather event) that occurs at one geographic region but not the other. Such an event may create a spike in demand at the one geographic region (e.g., a spike in demand for space heaters in response to a sudden and prolonged period of freezing weather or a spike in demand for portable air conditioners in response to a power outage in hot weather) while demand remains at the steady state in the other geographic region. When this type of situation occurs the retailers experiencing the sudden spike in demand may utilize the above-described techniques to obtain additional quantities of the product from the warehouse serving the other geographic region (e.g., the plurality of retailers 310 may obtain the product from the warehouse 374 or the plurality of retailers 320 may obtain the product from the warehouse 372), thereby mitigating the impact of the sudden spike in demand.

However, it may be the case that the warehouses do not have sufficient quantities of the product on-hand and the produce may need to be obtained from another source, as described with reference to FIG. 2. In the example of FIG. 3, the additional quantities of product may need to be obtained from the plurality of retailers 330 or one of a plurality of producers 340. As described above with reference to FIG. 2, the retailer(s) experiencing high demand may provide information to the demand management device 110 and the matching engine 118 may initiate operations to identify sources of the product in sufficient quantities to meet the demand. In some aspects, the particular sources may be prioritized according to information provided by the set of related retailers 302. For example, the set of retailers 302 may have established relationships with the producers 342 and 344, both of which manufacture the product for which demand is high. Additionally, the producer 346 may manufacture the product. The set of retailers 302 may provide prioritization information that specifies the matching engine 118 should source the product from the producer 342 first, then the producer 344, and only source the product from the producer 346 if it cannot obtain sufficient quantities of the product to meet the demand from the producers 342, 344. Moreover, the prioritization information may specify that the matching engine may source the product from one or more of the plurality of retailers 330 if the product cannot be sourced from the approved producers (e.g., the producers 342, 344, 346). As another example, the prioritization information may also specify that matching engine 118 should attempt to source the product from any existing shipments (i.e., shipments that are in-transit by one of the logistics providers 350) of the product to the warehouses 372, 374 (or one of the retailers R1,R2) prior to attempting to source from the producers. In this manner the retailer may exert some control over how the product is sourced, rather than leaving the sourcing to the discretion of the matching engine 118.

In an aspect, operations to source products may be provided by one or more smart contracts. For example, a smart contract may be executed when demand is detected by the matching engine 118. The smart contract may be configured to control various aspects of the fulfillment of products based on demand. For example, the smart contract may be configured with prioritization information (e.g., the priority information described above) to control the source (or sources) from which a product is obtained, the order in which those sources are consulted with respect to fulfilling the demand, or other factors. The prioritization information may also specify which logistic provider should be used to transport the product. In the event that the first priority logistics provider is not available the prioritization information may also identify additional logistics providers that may be used.

Additionally or alternatively, smart contracts may be used to control privacy of data shared with the demand management device 110. For example, a supply/demand smart contract may be deployed on the demand management device(s) 110. The supply/demand smart contract may be configured to control the flow of information to and from the various supply chain participants. When a retailer or other entity has demand for a product that may submit demand information to the smart contract to inform other participants of the new demand and producers or manufacturers may submit supply information to the smart contract to inform other participants of the available supply. To illustrate, a producer may have a quantity of ground beef available and may submit supply information that indicates the quantity of ground beef to the smart contract (e.g., 1,000 pounds of ground beef). The submitted information may include information other than quantity data, such as to indicate characteristics or a description of the product (e.g., the ground beef 80/20, 85/15, 90/10, etc.), the production date, the source of the product (e.g., the ranch where the beef came from, etc.), or other types of information. Similarly, a retailer may submit demand information that indicates a product having demand, such as to indicate demand for 400 pounds of ground beef, to the smart contract. The information submitted by the retailer may also include requirements information, such as to indicate the demand is for ground beef that is either 80/20 or 80/15, a maximum production date (e.g., the ground beef should have been produced within the last "X" days, weeks, etc.), or other types of information that may be used to identify a supply of the product.

The matching engine 118 may be configured to compare supply information and demand information provided to the supply/demand smart contract in order to match demand for products with available supply of those products. During the comparing the matching engine 118 may verify whether the supply information meets the requirements submitted with the demand information and where a match is identified, the smart contract may notify each entity (e.g., indicate to the retailer that at least a portion of the product demand is available or indicate to the producer that demand for the product exists). In an aspect, the smart contract may be configured to receive confirmation that the demand should be fulfilled from the matched supply and may only initiate fulfillment of the demand from the supply upon receiving approval from both parties. In an aspect, approval may be obtained via digital signatures provided to the smart contract. In an additional or alternative aspect, the matching engine 118 may automatically initiate operations to fulfill the demand from the available supply upon identifying the match. For example, where permissions of the retailer authorize automatic fulfillment the matching engine 118 may initiate operations to have a logistics provider (e.g., one of the logistics providers 350) pick up a quantity of the available product supply from the producer for delivery to the retailer. In some aspects, the smart contract may also facilitate payment to producers for quantities of products provided to retailers. For example, when the retailer approves the fulfillment of the demand from the available supply (or approval is automatic), the smart contract may automatically generate an invoice to the retailer or may automatically debit an account of the retailer and credit the account of the producer (and the logistics provider).

In some aspects, the identity of the parties involved in a transaction to fulfill demand may be kept private until both parties accept the fulfillment based on the demand and the available supply. For example, the retailer may not know which producer manufactured the available supply of a product and the producer may not know which retailer is purchasing all or a portion of the available supply until both parties have agreed to fulfill the demand from the available supply of the producer. Such capabilities may enable producers, retailers, and other supply chain participants to remain anonymous until supply of the product is obtained. In this manner, new supply chain distribution channels may be established similar to the techniques described above with reference to FIG. 2. It is noted that in some instances the matching engine 118 may maintain a list of existing relationships and may allow entities with existing relationships to see the involved parties, rather than keeping the entity identities anonymous. Such features may be controlled by permissions of the entities, which may provide options for remaining anonymous until fulfillment is agreed to regardless of existing relationships, only remaining anonymous when an existing relationship does not exist, or not being anonymous at all regardless of the existence or non-existence of a relationship.

The smart contract may also include information about whether equivalent products may be used. For example, as described above with reference to FIG. 2, where a specific product cannot be obtained or at least not obtained in sufficient quantities to meet real-time demand, the matching engine 118 may determine whether sources of equivalent products are available. The smart contract may provide information that identifies the equivalent products (e.g., stock keeping unit (SKU) information, product parameters, etc.). In some aspects the smart contract may be used to manufacture equivalent products. To illustrate, suppose that the product is a "house" brand of cereal manufactured by producer 344. The producer 342 may also manufacture cereal and the smart contract may authorize the producer 342 to produce a quantity of the "house" brand cereal for the retailer. To facilitate the manufacturing, the smart contract may be configured to provide the producer 342 with branding information for use in producing the boxes for the cereal, the recipe for the cereal, or other information that enables the producer to manufacture the cereal (or any other product) in a manner that is consistent with the needs of the retailer.

In an aspect, the smart contract may specify a particular quantity of the cereal that the producer 342 is authorized to produce for the retailer. Information regarding the quantity of the cereal authorized for production may be provided to the production infrastructure (e.g., the mixers, ovens, etc.) in order to prevent the producer 342 from manufacturing more than the needed quantity. The ability to have producers manufacture products on-demand using smart contracts that may limit production may enable a supply chain participant to overcome shortages caused by existing limitations in production capabilities. For example, production infrastructure and capacity is typically static and difficult to scale. Because of these limitations a producer may not be able to produce quantities of a product sufficient to meet demand. However, using the above-described techniques the retailer may authorize a second producer to manufacture the product and limit the production by the second producer to a quantity that allows the demand to be met without introducing delays that would otherwise occur while waiting for the producer to produce the product using the current infrastructure or to scale the infrastructure to a size sufficient to meet the demand. Moreover, sharing the information needed to manufacture the product directly with the manufacturing infrastructure may prevent the producer from misappropriating the information to produce quantities of the product that are not authorized.

The above-described techniques may also facilitate improved decision making (e.g., both manual and automated decision making) within the supply chain. To illustrate, suppose that the plurality of retailers 330 represent an industry group (e.g., a trade association, affiliation of small business, etc.) that includes the retailers (R). As a governance measure the members of the industry group may specify that re-routing or products to meet demand at other members of the industry group is authorized but that re-routing of products to meet demand at non-members, such as the plurality of retailers 310, 320 is not authorized, or at least not authorized in quantities below any existing demand within the industry group. Moreover, the industry group may configure a smart contract to manage aspects of interaction between the members. For example, where a quantity of product is re-routed from the retailer 332 to the retailer 334, the smart contract may control aspects of the costs associated with the re-routing, which retailer controls the logistics provider selection, or other features and functionality. Allowing the creation of private or semiprivate demand networks or associations of supply chain participants may enable smaller participants to compete more effectively against larger entities. For example, a larger retailer may receive larger discounts on products from producers due to the large quantities of product the retailer purchases. An industry group may establish an association of retailers that are individually small compared to the larger retailer, but may pool or aggregate purchases of products in order to receive discounts or other benefits that the larger retailer may derive from being able to purchase large quantities of a product at a time.

As another example, the ability for the matching engine 118 to obtain real-time or near-real-time visibility into both demand for products at the different retailers, as well as on-hand quantities of those products within the supply chain ecosystem, may also be leveraged to create an equitable fulfillment of demand from the available supply. For example, suppose that retailer 322 has on-hand quantities of a product sufficient to meet forecasted demand over a period of time (e.g., the next 10 days) and has a shipment of a quantity of the product on the way via the logistics provider 356. Now suppose that retailer 336 only has on-hand quantities of the product sufficient to meet the forecasted demand over a fraction of the period of time (e.g., the next 2 days). Under traditional supply chain approaches the retailer 322 would receive the shipment and the retailer 336 may run out of stock of the product. However, the matching engine 118 may detect that the retailer 336 may potentially run out of stock and that the retailer 322 has extra stock in transit. Upon detecting such conditions the matching engine 118 may re-route the shipment of the product (or a portion of the shipment) to the retailer 336, as described elsewhere herein, thereby preventing a potential shortage of the product at the retailer 336 as may otherwise occur using traditional approaches. In an aspect, the matching engine 118 may automatically schedule a new shipment of a product to retailers when product is dynamically re-routed to another retailer. For example, if the product re-routed from the retailer 322 was produced by the producer 342, the matching engine 118 may automatically schedule a new shipment of the product from the producer 342 via a logistics provider. In an aspect, automatic re-ordering of products in response to dynamic re-routing may be controlled by one or more smart contracts according to the concepts disclosed herein.

The ability to establish industry groups may also enable various participants within a supply chain to improve planning and be proactive with respect to changes and trends within the supply chain. For example, the logistics providers (LP1-LP6) may be for an industry group 350. Within the industry group 350 the participating logistics providers may share, rent, or loan resources (e.g., shipping containers, trucks, etc.) to each other meet the logistics needs of the entities served by the industry group. For example, a logistics provider 354 may operate a ship that transports products across the ocean and the logistics provider 352 may be a delivery service provider that provides ground transportation services for transporting shipping containers. As a member of the industry group 350, the logistics provider 354 may reserve a portion of the capacity on the ship for other members of the industry group 350, such as the logistics provider 352. If the reserved capacity is not utilized for a particular departure, the logistics provider 354 may then fill the unused reserve capacity from demand of other logistics providers needing to transport products via the ship. As another example, where the logistics provider 352 has demand that exceeds its capabilities, the excess demand may be transferred to another member of the industry group 350, such as the logistics provider 356. The transfer of demand from the logistics provider 352 to the logistics provider 356 may be facilitated via the matching engine 118 (e.g., using priority information, smart contracts, or another technique). The ability to create such groups and relationship may ensure that the industry group 350 can coordinate their operations to the benefit of the entire industry group 350. The functionality provided by the demand management device 110 and the matching engine 118 may be leveraged to ensure that logistics capacity is utilized in an efficient manner, such as by serving demand for logistics services from outside the industry group 350 to ensure each logistics provider is operating at or as close to available capacity.

In addition to the above-described functionality, demand sensing networks according to the present disclosure may also provide additional improvements to supply chains after sales occur. For example, currently, many supply chain participants utilize inefficient processes to handle returns. In some instances customers may merely collect returns at each retail location and then ship the returned items to another location, such as a clearance store or outlet store. In other instances customers may return products to the retail locations and then the items may either resold at the location or shipped to the manufacturer (e.g., if the product was returned as defective). While the ability to collect returns at many different retail locations provides convenience to the retailer's customers, the above-described techniques do not always result in an optimal or beneficial outcome to the retailer. For example, the retailer must pay to ship returned items to the clearance or outlet store, only to then sell returned items at a discount. Using the demand sensing networks of embodiments, when a product is returned the demand management device 110 or a retailer node may be consulted to determine whether demand exists within the supply chain for the returned product. If the product has demand within the retailer, the product may be provided to the retail location where the demand exists and sold at the normal price, minimizing the impact of the return on the retailer. Where the demand exists at a different retailer, the product may be sold to the other retailer who may then pay for shipping. It is noted that other scenarios may also be utilized to leverage the demand sensing network according to the concepts disclosed herein and the examples above are intended to be illustrative, rather than limiting with respect to processes to improve returns for retailers or other supply chain participants.

In some aspects the matching engine 118, the smart contracts, or other factors may be used to incentivize the various processes and functionality described above. For example, when an in-transit shipment of a product is re-routed from one supply chain participant to another, the participant receiving the shipment may provide compensation to the participant that did not receive the shipment. Such compensation may include covering the shipping costs, paying for shipping costs for a replacement shipment sent to the intended recipient of the re-routed shipment or paying for an upgraded quality of service level for the replacement shipment (e.g., paying the difference between a normal shipping service level and an expedited shipping service level). It is noted that any compensation or incentive mechanisms may be utilized to encourage behavior that promotes overall well-being within the supply chain and that specific examples have been provided for purposes of illustration, rather than by way of limitation. Also, it is noted that while aspects of the present disclosure may be configured to promote the overall health of the supply chains being served by the demand management device 110, such description does not mean that supply chain participants cannot use the techniques of the present disclosure in a competitive manner. For example, various industry groups may be established that may leverage the functionality of the demand management device 110 and the matching engine 118 to their advantage and to gain a competitive edge over other industry groups (e.g., an industry group that prioritizes use of a cargo ship within the industry group may help ensure that cargo ship operates at or near capacity while other cargo ships may experience underutilization of available capacity).

It is noted that a person of ordinary skill in the art will readily recognize that aspects of the present disclosure reference that have been described and illustrated with reference to FIGs. 1-3 represent an improvement to supply chain technologies and systems. For example, the matching engine 118 and the various operations and functionality it provides enable information to be shared and distributed within a supply chain to provide real-time visibility into both demand and supply for different products, as well as raw materials and sub-components that may be used to manufacture products. The real-time visibility and functionality provided by the disclosed DLT nodes may enable actions to be taken more rapidly and in some instances, automatically, to address changes to demand within a supply chain and may prevent shortages from occurring (e.g., via re-routing of products from areas of low demand to high demand or identifying new supply chain distribution channels). Additionally, many of the artificial shortages experienced at the onset of the pandemic in the United States, such as shortages of produce or other products that were scarce in grocery stores despite supply of those products being readily available from producers (e.g., supply previous used to support restaurants), were the result of problems communicating and disseminating information within supply chains and connecting supply chain participants to each other based on demand and supply data (e.g., entities with supply of products were not aware of entities with demand for those products). Those and other problems in existing supply chains and supply chain technologies are resolved by the systems and functionality disclosed herein. Moreover, the ability to utilize permissions and smart contracts provides the supply chain participants with increased levels of control across all aspects of the supply chain and the ability to permit automated processes that were not possible using previously supply chain technologies.

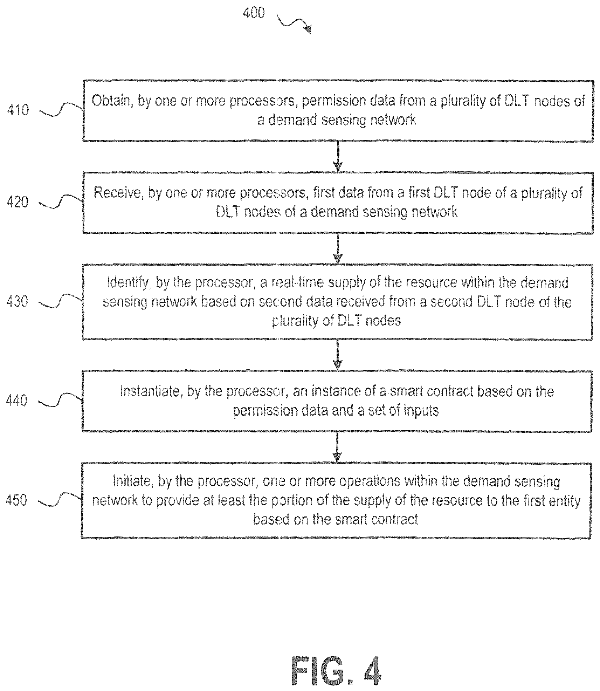

Referring to FIG. 4, a flow diagram illustrating an exemplary method for managing a supply chain according to embodiments of the present disclosure is shown as a method 400. In aspects, the method 400 may be performed by a system, such as the demand sensing network 100 of FIG. 1. In some aspects, the method 400 may be performed by a DLT node of the demand sensing network 100 of FIG. 1, such as the demand management device 110 of FIG. 1. The steps of the method 400 may be stored as instructions (e.g., the instructions 116 of FIG. 1). In some aspects, steps of the method 400 may be performed by a different device of the demand sensing network 100 of FIG. 1, such as the one of the DLT nodes 130, 140, 150, 160 of FIG. 1.

At step 410, the method 400 includes obtaining, by one or more processors, permission data from a plurality of DLT nodes of a demand sensing network. As explained above with reference to FIGs. 1-3, each DLT node of the plurality of DLT nodes may correspond to one of a plurality of entities supported by the demand sensing network, such as DLT nodes associated with retailers, franchisers, wholesalers, franchisees, producers, manufacturers, logistics service providers, and the like. The permission data may be configured to control sharing of data between different ones of the plurality of DLT nodes. For example, as explained above, the permission data for a particular entity or DLT node may specify which other DLT nodes (or entities) the particular entity's information (e.g., demand information, supply information, etc.) may be shared with. The permission data also specifies whether shared information is to be masked or not. To illustrate, an entity may configure permission data to require masking when shared with different entities that are not part of an industry that the entity is a member of and may not require masking (or may require a different level of masking) when the entity's data is shared with other entities that are members of the industry group. It is noted that other techniques may be used to configure the permissions and masking of data, as described elsewhere herein and that configuring masking of shared data based on industry groups is provided by way of example, rather than by way of limitation.

At step 420, the method 400 includes receiving, by the one or more processors, first data from a first DLT node of a plurality of DLT nodes. The first data may include information indicative of real-time demand for a resource at a first entity that is supported by the demand sensing network. For example, as described above with reference to FIG. 2, the first entity may be a retailer and at least a portion of the first data may be received from retail infrastructure (e.g., the retail infrastructure 214), which may be streamed to the first DLT node in-real time as transactions and other operations of the retailer occur.

At step 430, the method 400 includes identifying, by the one or more processors, a real-time supply of the resource within the demand sensing network based on second data received from a second DLT node of the plurality of DLT nodes. As described above with reference to FIG. 2, the real-time supply of the resource within the demand sensing network may be determined by querying other DLT nodes of the demand sensing network, receiving demand and/or supply data from the other DLT nodes, or other techniques. The information obtained by the one or more processors from the various DLT nodes of the demand sensing network may provide a comprehensive view of supply and demand across the entire demand sensing network, which may span one or more geographic areas (e.g., cities, counties, states, countries, etc.), and also across different industries (e.g., agriculture, manufacturing, retail, logistics, etc.). The ability to obtain end-to-end and real-time visibility into various aspects of the demand sensing network may enable identification of issues more quickly and allow the participants to the demand sensing network to more efficiently respond to changes within the network, as described and illustrated above.

At step 440, the method 400 includes instantiating, by the one or more processors, an instance of a smart contract based on the permission data and a set of inputs. As described above, the set of inputs may include all or a portion of the first data (e.g., a quantity of the resource needed to meet the demand), supply data derived from the second data (e.g., a quantity of the resource available within the demand sensing network), and quantity information identifying at least a portion of the supply of the resource (e.g., information that indicates a quantity of the available resource that will be provided to the first entity to meet the demand or a portion of the demand). As described above, the smart contract may be configured to allocate at least the portion of the supply of the resource of a second entity corresponding to the second DLT node to the first entity. It is noted that the smart contract may be utilized to provide additional functionality, such as to provide instructions to a logistics service provider regarding routing or delivery of at least the portion of the resource to the first entity at a particular location (e.g., a retailer location, a warehouse location, etc.) or other functionality to control operations for addressing changes in demand for resources within the demand sensing network. For example, at step 450, the method 400 includes initiating, by the one or more processors, one or more operations within the demand sensing network to provide at least the portion of the supply of the resource to the first entity based on the smart contract. In an aspect, the one or more operations may include re-routing the supply of the resource from a first destination (e.g., a retailer corresponding to the second DLT node) to a second destination (e.g., a retailer corresponding to the first DLT node). In this manner, the re-routed quantity of the resource may be diverted to a portion of the demand sensing network that has inadequate access or supply of the resource, regardless of whether the re-routed supply of the resource is in transit to the first destination or is sitting idle (e.g., in a storage facility, etc.).

As described above, the smart contract (or one of the DLT nodes) may determine, based on the permission data, a logistics provider transporting the supply of the resource to the first destination. Additionally or alternatively, where the supply of the resource is idle (i.e., not in transit), the smart contract (or one of the DLT nodes) may select the logistics provider and arrange for the logistics provider to pick-up the supply of the resource and deliver it to the second destination. In aspects where the smart contract is used to determine the logistics provider, the smart contract may transmit routing information to the logistics provider. The routing information may include instructions for the re-routing (e.g., if the supply of the resource is in transit), such as to indicate a quantity of the supply that should be delivered to the first destination, if any, and a quantity of the supply that should be delivered to the second destination. In an aspect, the smart contract may be configured to capture digital signatures of the entities involved in routing of resources within the demand sensing network. For example, the first entity (e.g., the retailer having demand for the resource) and the second entity (e.g., the entity have the supply of the resource) may provide digital signatures to the smart contract via their respective DLT nodes. Additionally, the logistics provide may also provide a digital signature to the smart contract to acknowledge the selection of the logistics provider for transporting the resource.

In some aspects, the smart contract may record information to a database (e.g., a database of a DLT node) or a blockchain. For example, digital signatures (e.g., of the entity supplying the resource, the entity having demand for the resource, and the logistics provider transporting the resource) may be recorded to the database or on a blockchain. In addition to recording the digital signatures, the smart contract may also record all or a portion of the first data and the second data to the blockchain or database, and/or may store other data on the blockchain, such as timestamps for when the signatures were received, the instructions for routing the resource to the first entity, the identity of the logistics provide, the quantity of the resource being directed to the first entity, other types of data, or combinations of thereof. Recording information associated with operations taken to address changes in demand within the demand sensing network may facilitate trustworthy auditing of demand sensing network. For example, as items are transported through customs the data recorded to the blockchain may be audited to verify a chain of custody, contents (i.e., information identifying the resources, quantity of resources, source(s) of the resources, and the like), destination information, or other types of information that may be used to authenticate and verify the transport of the resources. It is noted that auditing operations may be performed for other purposes as well, such as to review historical data regarding transportation times, whether resources were damaged in transport, historical demand, and the like.

In some aspects, a report may be generated based on the auditing. For example, where the audit pertains to issues related to clearing resources through customs, the report may include metrics that indicate an average time the same or similar resources spent held up in customs, differences in clearing times for resources transported by different logistics providers, or other types of information that may help estimate the impact that customs clearing may have on the transport of resources within the demand sensing network. Such auditing capabilities may enable more intelligent routing of resources within the demand sensing network, such as to initiate shipments earlier for certain resources for which customs clearance may take longer. As another example, aggregation may be performed for shipments to optimize transport. To illustrate, where two different entities have demand for a product, the matching engine or another DLT node may suggest that shipments of a resource destined for the two different entities be consolidated for a portion of the transportation route and then later separated for final delivery. Such operations may be performed to optimize delivery times, improve utilization and efficiency of logistics provider capacity, or other reasons. It is noted that the foregoing examples have been provided for purposes of illustration, rather than by way of limitation and the aspects of the present disclosure may provide additional capabilities (e.g., providing a notification to a producer suggesting an increase in a rate of production or a decrease in the rate of production for a resource based on identified changes and trends in demand for the resource), as would be apparent to one of ordinary skill in the art in view of the present disclosure.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The functional blocks and modules described herein (e.g., the functional blocks and modules in FIGs. 1-4) may comprise processors, electronics devices, hardware devices, electronics components, logical circuits, memories, software codes, firmware codes, etc., or any combination thereof. In addition, features discussed herein relating to FIGs. 1-4 may be implemented via specialized processor circuitry, via executable instructions, and/or combinations thereof.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed embodiment, the term "substantially" may be substituted with "within [a percentage] of" what is specified, where the percentage includes 0.1, 1, 5, and 10 percent; and the term "approximately" may be substituted with "within 10 percent of" what is specified. The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or. Additionally, the phrase "A, B, C, or a combination thereof" or "A, B, C, or any combination thereof" includes: A alone, B alone, C alone, a combination of A and B, a combination of A and C, a combination of B and C, or a combination of A, B, and C.

The terms "comprise" and any form thereof such as "comprises" and "comprising," "have" and any form thereof such as "has" and "having," and "include" and any form thereof such as "includes" and "including" are open-ended linking verbs. As a result, an apparatus that "comprises," "has," or "includes" one or more elements possesses those one or more elements, but is not limited to possessing only those elements. Likewise, a method that "comprises," "has," or "includes" one or more steps possesses those one or more steps, but is not limited to possessing only those one or more steps.

Any implementation of any of the apparatuses, systems, and methods can consist of or consist essentially of - rather than comprise/include/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb. Additionally, it will be understood that the term "wherein" may be used interchangeably with "where."

Further, a device or system that is configured in a certain way is configured in at least that way, but it can also be configured in other ways than those specifically described. Aspects of one example may be applied to other examples, even though not described or illustrated, unless expressly prohibited by this disclosure or the nature of a particular example.

Those of skill would further appreciate that the various illustrative logical blocks, modules, circuits, and algorithm steps (e.g., the logical blocks in FIGs. 1-2) described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logical blocks, modules, and circuits described in connection with the disclosure herein may be implemented or performed with a general-purpose processor (e.g., a processor operable to execute instructions in accordance with the concepts disclosed herein), a digital signal processor (DSP), an ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

"The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. Computer-readable storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, a connection may be properly termed a computer-readable medium. For example, if the software is transmitted from a website, server, or other remote source using a coaxial cable, fiber optic cable, twisted pair, or digital subscriber line (DSL), then the coaxial cable, fiber optic cable, twisted pair, or DSL, are included in the definition of medium. Disk and disc, as used herein, includes compact disc (CD), laser disc, optical disc, digital versatile disc (DVD), hard disk, solid state disk, and blu-ray disc where disks usually reproduce data magnetically, while discs reproduce data optically with lasers. Combinations of the above should also be included within the scope of computer-readable media.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:
Example 1. A system comprising:
   a memory storing permission data configured to control sharing of data between a plurality of distributed ledger technology (DLT) nodes of a demand sensing network, each DLT node of the plurality of DLT nodes corresponding to one of a plurality of entities supported by the demand sensing network;
   one or more processors communicatively coupled to the memory; and
   a matching engine executable by the one or more processors and configured to:
      receive first data from a first DLT node of the plurality of DLT nodes, the first data including information indicative of real-time demand for a resource at a first entity that is supported by the demand sensing network;
      identify, in real-time, a supply of the resource within the demand sensing network based on second data received from a second DLT node of the plurality of DLT nodes;
      instantiate an instance of a smart contract based on the permission data and a set of inputs, wherein the set of inputs comprises the first data, supply data derived from the second data, and quantity information identifying at least a portion of the supply of the resource, and wherein the smart contract is configured to allocate at least the portion of the supply of the resource of a second entity corresponding to the second DLT node to the first entity; and
      initiate one or more operations within the demand sensing network to provide at least the portion of the supply of the resource to the first entity based on the smart contract.
Example 2. The system of example 1, wherein the one or more operations comprise re-routing the supply of the resource from a first destination to a second destination, the second destination associated with an entity corresponding to the first DLT node, and wherein the supply of the resource is in transit to the first destination prior to the re-routing.
Example 3. The system of example 1 or 2, further comprising:
   determining, based on the permission data, a logistics provider transporting the supply of the resource to the first destination;
   transmitting, via the smart contract, routing information to the logistics provider, wherein the routing information comprises instructions for the re-routing; and
   recording a digital signature of the logistics provider, the digital signature corresponding to an acknowledgement of the instructions for the re-routing.
Example 4. The system of any one of the preceding examples, wherein at least the portion of the supply of the resource is re-routed to the first entity based on an expiration metric of the resource.
Example 5. The system of any one of the preceding examples, wherein instance of the smart contract is recorded on a blockchain, wherein the matching engine is configured to:
   record the first data and the second data to the blockchain;
   audit data recorded to the blockchain; and
   generate a report based on the auditing, wherein the report comprises information to establish a chain of custody for the resource and one or more raw or intermediate products used to produce the resource.
Example 6. The system of any one of the preceding examples, wherein the one or more operations within the demand sensing network comprise schedule a shipment of the resource to an entity associated with the second DLT node and one of increasing a rate of production for the resource or decreasing a rate of production for the resource.
Example 7. The system of any one of the preceding examples, wherein the one or more processors are configured to mask at least a portion of the first data prior to sharing the first data with an entity corresponding to the second DLT node.
Example 8. A method comprising:
   obtaining, by one or more processors, permission data from a plurality of distributed ledger technology (DLT) nodes of a demand sensing network, wherein each DLT node of the plurality of DLT nodes corresponds to one of a plurality of entities supported by the demand sensing network, and wherein the permission data is configured to control sharing of data between different ones of the plurality of DLT nodes;
   receiving, by the one or more processors, first data from a first DLT node of a plurality of DLT nodes, the first data including information indicative of real-time demand for a resource at a first entity that is supported by the demand sensing network;
   identifying, by the one or more processors, a real-time supply of the resource within the demand sensing network based on second data received from a second DLT node of the plurality of DLT nodes;
   instantiating, by the one or more processors, an instance of a smart contract based on the permission data and a set of inputs, wherein the set of inputs comprises the first data, supply data derived from the second data, and quantity information identifying at least a portion of the supply of the resource, and wherein the smart contract is configured to allocate at least the portion of the supply of the resource of a second entity corresponding to the second DLT node to the first entity; and
   initiating, by the one or more processors, one or more operations within the demand sensing network to provide at least the portion of the supply of the resource to the first entity based on the smart contract.
Example 9. The method of claim 8, wherein the one or more operations comprise re-routing the supply of the resource from a first destination to a second destination, the second destination associated with an entity corresponding to the first DLT node, and wherein the supply of the resource is in transit to the first destination prior to the re-routing.
Example 10. The method of claim 8 or 9, further comprising:
   determining, based on the permission data, a logistics provider transporting the supply of the resource to the first destination;
   transmitting, via the smart contract, routing information to the logistics provide, wherein the routing information comprises instructions for the re-routing; and
   recording a digital signature of the logistics provider, the digital signature corresponding to an acknowledgement of the instructions for the re-routing.
Example 11. The method of any one of the preceding examples 8 to 10, further comprising revoking at least one permission of the first entity, the at least one permission configured to enable sharing of data of the first entity with the second entity.
Example 12. The method of any one of the preceding examples 8 to 11, wherein instance of the smart contract is recorded on a blockchain, the method further comprising:
   recording the first data and the second data to the blockchain;
   auditing data recorded to the blockchain; and
   generating a report based on the auditing, wherein the report comprises information to establish a chain of custody for the resource and one or more raw or intermediate products used to produce the resource.
Example 13. The method of any one of the preceding examples 8 to 12, wherein the one or more operations within the demand sensing network comprise schedule a shipment of the resource to an entity associated with the second DLT node and one of increasing a rate of production for the resource or decreasing a rate of production for the resource.
Example 14. The method of any one of the preceding examples 8 to 13, wherein the one or more processors are configured to mask at least a portion of the first data prior to sharing the first data with an entity corresponding to the second DLT node.
Example 15. The method of any one of the preceding examples 8 to 14, wherein the permission data comprises governance information, and wherein at least the portion of the supply of the resource of the second entity is provided to the first entity based at least in part on the governance information.
Example 16. The method of any one of the preceding examples 8 to 15, wherein the one or more operations comprise initiating a transfer of an additional supply of the resource to the second entity to replenish the supply of the resource at the second entity, wherein the additional supply of the resource is provided by a producer of the resource, and wherein the transfer of the additional supply of the resource is prioritized based on the governance information.
Example 17. A non-transitory computer-readable storage medium storing instructions that, when executed by one or more processors, cause the one or more processors to perform operations comprising:
   obtaining permission data from a plurality of distributed ledger technology (DLT) nodes of a demand sensing network, wherein each DLT node of the plurality of DLT nodes corresponds to one of a plurality of entities supported by the demand sensing network, and wherein the permission data is configured to control sharing of data between different ones of the plurality of DLT nodes;
   receiving first data from a first DLT node of a plurality of DLT nodes, the first data including information indicative of real-time demand for a resource at a first entity that is supported by the demand sensing network;
   identifying a real-time supply of the resource within the demand sensing network based on second data received from a second DLT node of the plurality of DLT nodes;
   instantiating an instance of a smart contract based on the permission data and a set of inputs, wherein the set of inputs comprises the first data, supply data derived from the second data, and quantity information identifying at least a portion of the supply of the resource, and wherein the smart contract is configured to allocate at least the portion of the supply of the resource of a second entity corresponding to the second DLT node to the first entity; and
   initiating one or more operations within the demand sensing network to provide at least the portion of the supply of the resource to the first entity based on the smart contract.
Example 18. The non-transitory computer-readable storage medium of example 17, wherein the one or more operations comprise:
   re-routing the supply of the resource from a first destination to a second destination, the second destination associated with a first entity corresponding to the first DLT node, wherein the supply of the resource is in transit to the first destination prior to the re-routing, and wherein at least the portion of the supply of the resource is re-routed to the first entity based on an expiration metric of the resource;
   determining, based on the permission data, a logistics provider transporting the supply of the resource to the first destination; and
   transmitting, via the smart contract, routing information to the logistics provider, wherein the routing information comprises instructions for the re-routing.
Example 19. The non-transitory computer-readable storage medium of example 17 or 18, wherein at least a portion of the first data is masked prior to sharing the first data with an entity corresponding to the second DLT node.
Example 20. The non-transitory computer-readable storage medium of any one of the preceding examples 17 to 19, wherein the permission data comprises governance information, wherein at least the portion of the supply of the resource of the second entity is provided to the first entity based at least in part on the governance information, and wherein the one or more operations comprise initiating a transfer of an additional supply of the resource to the second entity to replenish the supply of the resource at the second entity, wherein the additional supply of the resource is provided by a producer of the resource, and wherein the transfer of the additional supply of the resource is prioritized based on the governance information.

Embodiments of the present disclosure leverage distributed ledger technology (DLT) to maintain the privacy of data associated with different supply chain participants and allow that data to be shared in a controlled manner (e.g., using permissions and smart contracts). The sharing of the supply chain data enables actions to be determined to optimize distribution of products within the supply chain, such as to supply products to consumer-facing outlets in quantities commensurate with real-time demand, thereby resulting in a more efficient supply chain with minimal waste and excess inventory. Moreover, the DLT nodes leveraged by the disclosed demand sensing network provide real-time end-to-end visibility into the demand and transport of products within the supply chain, which allows rapid action to be taken in response to changing demand.

The above specification and examples provide a complete description of the structure and use of illustrative implementations. Although certain examples have been described above with a certain degree of particularity, or with reference to one or more individual examples, those skilled in the art could make numerous alterations to the disclosed implementations without departing from the scope of this invention. As such, the various illustrative implementations of the methods and systems are not intended to be limited to the particular forms disclosed. Rather, they include all modifications and alternatives falling within the scope of the claims, and examples other than the one shown may include some or all of the features of the depicted example. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several implementations.

The claims are not intended to include, and should not be interpreted to include, means plus- or step-plus-function limitations, unless such a limitation is explicitly recited in a given claim using the phrase(s) "means for" or "step for," respectively.

As one of ordinary skill in the art will readily appreciate from the present disclosure, processes, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. A system comprising:
a memory storing permission data configured to control sharing of data between a plurality of distributed ledger technology (DLT) nodes of a demand sensing network, each DLT node of the plurality of DLT nodes corresponding to one of a plurality of entities supported by the demand sensing network,
wherein the permission data is configured to be received from the plurality of distributed ledger technology (DLT) nodes of the demand sensing network and is configured to specify whether the shared information should be masked or not;
one or more processors communicatively coupled to the memory; and
a matching engine executable by the one or more processors and configured to:
receive first data from a first DLT node of the plurality of DLT nodes, the first data including information indicative of real-time demand for a resource at a first entity that is supported by the demand sensing network,
wherein when the permission data specifies that the shared information should be masked, the one or more processors mask at least a portion of the first data prior to sharing the first data with an entity corresponding to a second DLT node, and
wherein the masking comprises removing at least a portion of data, altering at least a portion of information, or abstracting at least a portion of information;
identify, in real-time, a supply of the resource within the demand sensing network based on second data received from the second DLT node of the plurality of DLT nodes;
instantiate an instance of a smart contract based on the permission data and a set of inputs, wherein the set of inputs comprises the first data, supply data derived from the second data, and quantity information identifying at least a portion of the supply of the resource, and wherein the smart contract is configured to allocate at least the portion of the supply of the resource of a second entity corresponding to the second DLT node to the first entity; and
initiate one or more operations within the demand sensing network to provide at least the portion of the supply of the resource to the first entity based on the smart contract.

2. The system of claim 1, wherein the one or more operations comprise re-routing the supply of the resource from a first destination to a second destination, the second destination associated with an entity corresponding to the first DLT node, and wherein the supply of the resource is in transit to the first destination prior to the re-routing.

3. The system of claim 2, further comprising:
determining, based on the permission data, a logistics provider transporting the supply of the resource to the first destination;
transmitting, via the smart contract, routing information to the logistics provider, wherein the routing information comprises instructions for the re-routing; and
recording a digital signature of the logistics provider, the digital signature corresponding to an acknowledgement of the instructions for the re-routing.

4. The system of claim 1, wherein at least the portion of the supply of the resource is re-routed to the first entity based on an expiration metric of the resource.

5. The system of claim 1, wherein instance of the smart contract is recorded on a blockchain, wherein the matching engine is configured to:
record the first data and the second data to the blockchain;
audit data recorded to the blockchain; and
generate a report based on the auditing, wherein the report comprises information to establish a chain of custody for the resource and one or more raw or intermediate products used to produce the resource.

6. The system of claim 1, wherein the one or more operations within the demand sensing network comprise schedule a shipment of the resource to an entity associated with the second DLT node and one of increasing a rate of production for the resource or decreasing a rate of production for the resource.

7. A method comprising:
obtaining, by one or more processors, permission data from a plurality of distributed ledger technology (DLT) nodes of a demand sensing network, wherein each DLT node of the plurality of DLT nodes corresponds to one of a plurality of entities supported by the demand sensing network, and wherein the permission data is configured to control sharing of data between different ones of the plurality of DLT nodes and the permission data specifies whether the shared information should be masked or not;
receiving, by the one or more processors, first data from a first DLT node of a plurality of DLT nodes, the first data including information indicative of real-time demand for a resource at a first entity that is supported by the demand sensing network,
wherein when the permission data specifies that the shared information should be masked, the one or more processors are configured to mask at least a portion of the first data prior to sharing the first data with an entity corresponding to a second DLT node, and
wherein the masking comprises removing at least a portion of data, altering at least a portion of information, or abstracting at least a portion of information;
identifying, by the one or more processors, a real-time supply of the resource within the demand sensing network based on second data received from the second DLT node of the plurality of DLT nodes;
instantiating, by the one or more processors, an instance of a smart contract based on the permission data and a set of inputs, wherein the set of inputs comprises the first data, supply data derived from the second data, and quantity information identifying at least a portion of the supply of the resource, and wherein the smart contract is configured to allocate at least the portion of the supply of the resource of a second entity corresponding to the second DLT node to the first entity; and
initiating, by the one or more processors, one or more operations within the demand sensing network to provide at least the portion of the supply of the resource to the first entity based on the smart contract.

8. The method of claim 7, wherein the one or more operations comprise re-routing the supply of the resource from a first destination to a second destination, the second destination associated with an entity corresponding to the first DLT node, and wherein the supply of the resource is in transit to the first destination prior to the re-routing.

9. The method of claim 8, further comprising:
determining, based on the permission data, a logistics provider transporting the supply of the resource to the first destination;
transmitting, via the smart contract, routing information to the logistics provide, wherein the routing information comprises instructions for the re-routing; and
recording a digital signature of the logistics provider, the digital signature corresponding to an acknowledgement of the instructions for the re-routing.

10. The method of claim 7, wherein at least the portion of the supply of the resource is re-routed to the first entity based on an expiration metric of the resource.

11. The method of claim 7, wherein instance of the smart contract is recorded on a blockchain, the method further comprising:
recording the first data and the second data to the blockchain;
auditing data recorded to the blockchain; and
generating a report based on the auditing, wherein the report comprises information to establish a chain of custody for the resource and one or more raw or intermediate products used to produce the resource.

12. The method of claim 7, wherein the one or more operations within the demand sensing network comprise schedule a shipment of the resource to an entity associated with the second DLT node and one of increasing a rate of production for the resource or decreasing a rate of production for the resource.

13. A non-transitory computer-readable storage medium storing instructions that, when executed by one or more processors, cause the one or more processors to perform the method of any of claims 7-12.

## Patentansprüche

1. Ein System, das Folgendes umfasst:
einen Speicher, der Berechtigungsdaten speichert, die dazu konfiguriert sind, die gemeinsame Nutzung von Daten zwischen einer Vielzahl von *Distributed-Ledger-Technologie-*Knoten (DLT-Knoten) eines Bedarfserkennungsnetzwerks (*demand sensing network*) zu steuern, wobei jeder **DLT-Knoten** der Vielzahl von **DLT-Knoten** einer von einer Vielzahl von Entitäten entspricht, die durch das Bedarfserkennungsnetzwerk unterstützt werden,
wobei die Berechtigungsdaten konfiguriert sind, um von der Anzahl der *Distributed-Ledger-Technologie*-Knoten (DLT-Knoten) des Bedarfserkennungsnetzwerks empfangen zu werden, und konfiguriert sind, um anzugeben, ob die gemeinsam genutzten Informationen maskiert werden sollen oder nicht;
einen oder mehrere Prozessoren, die mit dem Speicher kommunikativ gekoppelt sind; und
eine Abgleich-Engine (*matching engine*), die von dem einen oder den mehreren Prozessoren ausführbar ist und konfiguriert ist, zum:
Empfangen erster Daten von einem ersten DLT-Knoten der Vielzahl von DLT-Knoten, wobei die ersten Daten Informationen beinhalten, die den Echtzeitbedarf an einer Ressource bei einer ersten Entität angeben, die von dem Bedarfserkennungsnetzwerk unterstützt wird,
wobei, wenn die Berechtigungsdaten angeben, dass die gemeinsam genutzten Informationen maskiert werden sollen, der eine oder die mehreren Prozessoren zumindest einen Teil der ersten Daten maskieren, bevor sie die ersten Daten mit einer Entität teilen, die einem zweiten DLT-Knoten entspricht, und
wobei das Maskieren Folgendes umfasst: das Entfernen mindestens eines Teils der Daten, das Ändern mindestens eines Teils der Informationen oder das Abstrahieren mindestens eines Teils der Informationen;
Identifizieren, in Echtzeit, eines Ressourcenbestands (*supply of the resource*) innerhalb des Bedarfserkennungsnetzwerks auf der Grundlage zweiter Daten, die vom zweiten DLT-Knoten der Vielzahl von DLT-Knoten empfangen werden;
Instanziieren einer Instanz eines *Smart Contracts* auf der Grundlage der Berechtigungsdaten und einer Menge von Eingaben, wobei die Menge von Eingaben Folgendes umfasst: die ersten Daten, aus den zweiten Daten abgeleitete Angebotsdaten und Quantitätsinformationen, die mindestens einen Teil des Ressourcenbestands identifizieren, und wobei der *Smart Contract* dazu konfiguriert ist, zumindest den Teil des Ressourcenbestands einer zweiten Entität, die dem zweiten DLT-Knoten entspricht, der ersten Entität zuzuweisen; und
Initiieren einer oder mehrerer Operationen innerhalb des Bedarfserkennungsnetzwerks, um der ersten Entität, auf der Grundlage des *Smart Contracts,* zumindest den Teil des Ressourcenbestands bereitzustellen.

2. Das System nach Anspruch 1, wobei die eine oder die mehreren Operationen das Umleiten des Ressourcenbestands von einem ersten Ziel zu einem zweiten Ziel umfassen, wobei das zweite Ziel einer Einheit zugeordnet ist, die dem ersten DLT-Knoten entspricht, und wobei sich der Ressourcenbestand vor der Umleitung auf dem Weg zum ersten Ziel befindet.

3. Das System nach Anspruch 2, das ferner Folgendes umfasst:
Bestimmen, auf der Grundlage der Berechtigungsdaten, eines Logistikdienstleisters, der den Ressourcenbestand zum ersten Ziel transportiert;
Übermitteln, über den *Smart Contract,* von Routing-Informationen an den Logistikdienstleister, wobei die Routing-Informationen Anweisungen für die Umleitung umfassen; und
Aufzeichnen einer digitalen Signatur des Logistikdienstleisters, wobei die digitale Signatur einer Bestätigung der Anweisungen für die Umleitung entspricht.

4. Das System nach Anspruch 1, wobei zumindest der Teil des Ressourcenbestands auf der Grundlage einer Verfallsmetrik der Ressource an die erste Einheit umgeleitet wird.

5. Das System nach Anspruch 1, wobei die Instanz des *Smart Contracts* in einer Blockchain aufgezeichnet wird, wobei die Abgleich-Engine konfiguriert ist, zum:
Aufzeichnen der ersten Daten und der zweiten Daten in der Blockchain;
Auditieren bzw. Prüfen (*audit*) der in der Blockchain aufgezeichneten Daten; und
Erstellen, auf der Grundlage des Auditierens, eines Berichts, wobei der Bericht Informationen umfasst, um eine Nachweiskette (*chain of custody*) für die Ressource und ein oder mehrere Roh- oder Zwischenprodukte, die zur Herstellung der Ressource verwendet werden.

6. Das System nach Anspruch 1, wobei die eine oder mehreren Operationen innerhalb des Bedarfserkennungsnetzwerks Folgendes umfassen: Planen einer Lieferung der Ressource an eine mit dem zweiten DLT-Knoten zugeordnete Einheit und eines von einem Erhöhen einer Produktionsrate für die Ressource oder einem Verringern einer Produktionsrate für die Ressource.

7. Ein Verfahren, das Folgendes umfasst:
Erhalten, durch einen oder mehrere Prozessoren, von Berechtigungsdaten von einer Vielzahl von *Distributed-Ledger-Technologie-*Knoten (DLT-Knoten) eines Bedarfserkennungsnetzwerks (*demand sensing network*), wobei jeder DLT-Knoten der Vielzahl von DLT-Knoten einer von einer Vielzahl von Einheiten entspricht, die vom Bedarfserkennungsnetzwerk unterstützt werden, und wobei die Berechtigungsdaten konfiguriert sind, um die gemeinsame Nutzung von Daten zwischen verschiedenen einer Vielzahl der DLT-Knoten zu steuern, und wobei die Berechtigungsdaten angeben, ob die gemeinsam genutzten Informationen maskiert werden sollen oder nicht;
Empfangen, durch den einen oder die mehreren Prozessoren, erster Daten von einem ersten DLT-Knoten einer Vielzahl von DLT-Knoten, wobei die ersten Daten Informationen beinhalten, die den Echtzeitbedarf an einer Ressource bei einer ersten Entität angeben, die vom Bedarfserkennungsnetzwerk unterstützt wird,
wobei, wenn die Berechtigungsdaten angeben, dass die gemeinsam genutzten Informationen maskiert werden sollen, der eine oder die mehreren Prozessoren dazu konfiguriert sind, zumindest einen Teil der ersten Daten zu maskieren, bevor sie die ersten Daten mit einer Einheit teilen, die einem zweiten DLT-Knoten entspricht, und
wobei das Maskieren Folgendes umfasst: das Entfernen mindestens eines Teils der Daten, das Ändern mindestens eines Teils der Informationen oder das Abstrahieren mindestens eines Teils der Informationen;
Identifizieren, durch den einen oder die mehreren Prozessoren, eines Echtzeit-Bestands der Ressource innerhalb des Bedarfserkennungsnetzwerks auf der Grundlage von zweiten Daten, die vom zweiten DLT-Knoten der Vielzahl von DLT-Knoten empfangen werden;
Instanziieren, durch den einen oder die mehreren Prozessoren, einer Instanz eines *Smart Contracts* auf der Grundlage der Berechtigungsdaten und einer Menge von Eingaben, wobei die Menge von Eingaben Folgendes umfasst: die ersten Daten, aus den zweiten Daten abgeleitete Angebotsdaten und Quantitätsinformationen, die mindestens einen Teil des Ressourcenbestands identifizieren, und wobei der *Smart Contract* dazu konfiguriert ist, zumindest den Teil des Ressourcenbestands einer zweiten Entität, die dem zweiten DLT-Knoten entspricht, der ersten Entität zuzuweisen; und
Initiieren, durch den einen oder die mehreren Prozessoren, einer oder mehrerer Operationen innerhalb des Bedarfserkennungsnetzwerks, um der ersten Entität, auf der Grundlage des *Smart Contracts,* zumindest den Teil des Ressourcenbestands bereitzustellen.

8. Das Verfahren nach Anspruch 7, wobei die eine oder die mehreren Operationen das Umleiten des Ressourcenbestands von einem ersten Ziel zu einem zweiten Ziel umfassen, wobei das zweite Ziel einer Einheit zugeordnet ist, die dem ersten DLT-Knoten entspricht, und wobei sich der Ressourcenbestand vor der Umleitung auf dem Weg zum ersten Ziel befindet.

9. Das Verfahren nach Anspruch 8, das ferner Folgendes umfasst:
Bestimmen, auf der Grundlage der Berechtigungsdaten, eines Logistikdienstleisters, der den Ressourcenbestand zum ersten Ziel transportiert;
Übermitteln, über den *Smart Contract,* von Routing-Informationen an den Logistikdienstleister, wobei die Routing-Informationen Anweisungen für die Umleitung umfassen; und
Aufzeichnen einer digitalen Signatur des Logistikdienstleisters, wobei die digitale Signatur einer Bestätigung der Anweisungen für die Umleitung entspricht.

10. Das Verfahren nach Anspruch 7, wobei zumindest der Teil des Ressourcenbestands auf der Grundlage einer Verfallsmetrik der Ressource an die erste Einheit umgeleitet wird.

11. Das Verfahren nach Anspruch 7, wobei eine Instanz des *Smart Contracts* in einer Blockchain aufgezeichnet wird, wobei das Verfahren ferner Folgendes umfasst:
Aufzeichnen der ersten Daten und der zweiten Daten in der Blockchain;
Auditieren bzw. Prüfen (*audit*) der in der Blockchain aufgezeichneten Daten; und
Erstellen, auf der Grundlage des Auditierens, eines Berichts, wobei der Bericht Informationen umfasst, um eine Nachweiskette (*chain of custody*) für die Ressource und ein oder mehrere Roh- oder Zwischenprodukte, die zur Herstellung der Ressource verwendet werden.

12. Das Verfahren nach Anspruch 7, wobei die eine oder mehreren Operationen innerhalb des Bedarfserkennungsnetzwerks Folgendes umfassen: Planen einer Lieferung der Ressource an eine mit dem zweiten DLT-Knoten zugeordnete Einheit und eines von einem Erhöhen einer Produktionsrate für die Ressource oder einem Verringern einer Produktionsrate für die Ressource.

13. Ein nicht-flüchtiges, computerlesbares Speichermedium, das Anweisungen speichert, die, wenn sie von einem oder mehreren Prozessoren ausgeführt werden, den einen oder die mehreren Prozessoren veranlassen, das Verfahren nach irgendeinem der Ansprüche von 7 bis 12 durchzuführen.

## Revendications

1. Un système comprenant :
une mémoire stockant des données de permission configurées pour contrôler le partage de données entre une pluralité de nœuds de technologie de registre distribué *(distributed ledger technology -* DLT) d'un réseau de détection de demande, chaque nœud DLT de la pluralité de nœuds DLT correspondant à l'une d'une pluralité d'entités soutenues par le réseau de détection de demande,
sachant que les données de permission sont configurées pour être reçues de la pluralité de nœuds de technologie de registre distribué (DLT) du réseau de détection de demande et sont configurées pour spécifier si les informations partagées doivent être masquées ou non ;
un ou plusieurs processeurs couplés de manière communicative à la mémoire ; et
un moteur de mise en correspondance exécutable par le ou les processeurs et configuré pour :
recevoir des premières données provenant d'un premier nœud DLT parmi la pluralité de nœuds DLT, les premières données incluant des informations indiquant la demande en temps réel d'une ressource au niveau d'une première entité soutenue par le réseau de détection de demande,
sachant que, lorsque les données de permission spécifient que les informations partagées doivent être masquées, le ou les processeurs masquent au moins une partie des premières données avant de partager les premières données avec une entité correspondant à un deuxième nœud DLT, et
sachant que le masquage comprend la suppression d'au moins une partie des données, la modification d'au moins une partie des informations ou l'abstraction d'au moins une partie des informations ;
identifier, en temps réel, une offre de la ressource à l'intérieur du réseau de détection de demande sur la base de deuxièmes données reçues du deuxième nœud DLT parmi la pluralité de nœuds DLT ;
instancier une instance d'un *smart contract* sur la base des données de permission et d'un ensemble d'entrées, sachant que l'ensemble d'entrées comprend les premières données, les données d'offre ou encore d'approvisionnement (*supply data*) dérivées des deuxièmes données et des informations de quantité identifiant au moins une partie de l'offre de la ressource, et sachant que le *smart contract* est configuré pour allouer au moins la partie de l'offre de la ressource d'une deuxième entité correspondant au deuxième nœud DLT à la première entité ; et pour
initier une ou plusieurs opérations à l'intérieur du réseau de détection de demande afin de fournir au moins la partie de l'offre en ressource à la première entité sur la base du *smart contract.*

2. Le système d'après la revendication 1, sachant que la ou les opérations comprennent le réacheminement de l'approvisionnement en ressources d'une première destination vers une deuxième destination, la deuxième destination étant associée à une entité correspondant au premier nœud DLT, et sachant que l'approvisionnement en ressources est en transit vers la première destination avant le réacheminement.

3. Le système d'après la revendication 2, comprenant en outre le fait de :
déterminer, sur la base des données de permission, un prestataire logistique transportant l'approvisionnement en ressources vers la première destination ;
transmettre, via le *smart contract,* des informations d'acheminement au prestataire logistique, sachant que les informations d'acheminement comprennent des instructions pour le réacheminement ; et de
enregistrer une signature numérique du prestataire logistique, la signature numérique correspondant à une confirmation des instructions pour le réacheminement.

4. Le système d'après la revendication 1, sachant que au moins ladite partie de l'approvisionnement en ressources est réacheminée vers la première entité sur la base d'une métrique d'expiration des ressources.

5. Le système d'après la revendication 1, sachant que l'instance du *smart contract* est enregistrée sur une blockchain, sachant que le moteur de mise en correspondance est configuré pour :
enregistrer les premières données et les deuxièmes données sur la blockchain ;
auditer les données enregistrées sur la blockchain ; et pour
générer un rapport sur la base de l'audit, sachant que le rapport comprend des informations permettant d'établir une chaîne de traçabilité pour la ressource et un ou plusieurs produits bruts ou intermédiaires utilisés pour produire la ressource.

6. Le système d'après la revendication 1, sachant que la ou les opérations à l'intérieur du réseau de détection de demande comprennent la planification d'un envoi de la ressource vers une entité associée au deuxième nœud DLT et l'une parmi une augmentation du taux de production de la ressource ou une diminution du taux de production de la ressource.

7. Un procédé comprenant le fait de :
obtenir, par un ou plusieurs processeurs, des données de permission en provenance d'une pluralité de nœuds de technologie de registre distribué *(distributed ledger technology -* DLT) d'un réseau de détection de demande, sachant que chaque nœud DLT de la pluralité de nœuds DLT correspond à l'une d'une pluralité d'entités soutenues par le réseau de détection de demande, et sachant que les données de permission sont configurées pour contrôler le partage de données entre différents nœuds parmi la pluralité de nœuds DLT, et les données de permission spécifiant si les informations partagées doivent être masquées ou non ;
recevoir, par le ou les processeurs, des premières données provenant d'un premier nœud DLT parmi la pluralité de nœuds DLT, les premières données incluant des informations indiquant la demande en temps réel d'une ressource au niveau d'une première entité soutenue par le réseau de détection de demande,
sachant que, lorsque les données de permission spécifient que les informations partagées doivent être masquées, le ou les processeurs sont configurés pour masquer au moins une partie des premières données avant de partager les premières données avec une entité correspondant à un deuxième nœud DLT, et
sachant que le masquage comprend la suppression d'au moins une partie des données, la modification d'au moins une partie des informations ou l'abstraction d'au moins une partie des informations ;
identifier, par le ou les processeurs, une offre en temps réel de la ressource à l'intérieur du réseau de détection de demande sur la base de deuxièmes données reçues du deuxième nœud DLT parmi la pluralité de nœuds DLT ;
instancier, par le ou les processeurs, une instance d'un *smart contract* sur la base des données de permission et d'un ensemble d'entrées, sachant que l'ensemble d'entrées comprend les premières données, les données d'offre ou encore d'approvisionnement (*supply data*) dérivées des deuxièmes données et des informations de quantité identifiant au moins une partie de l'offre de la ressource, et sachant que le *smart contract* est configuré pour allouer au moins la partie de l'offre de la ressource d'une deuxième entité correspondant au deuxième nœud DLT à la première entité ; et de
initier, par le ou les processeurs, une ou plusieurs opérations à l'intérieur du réseau de détection de demande afin de fournir au moins la partie de l'offre en ressource à la première entité sur la base du *smart contract.*

8. Le procédé d'après la revendication 7, sachant que la ou les opérations comprennent le réacheminement de l'approvisionnement en ressources d'une première destination vers une deuxième destination, la deuxième destination étant associée à une entité correspondant au premier nœud DLT, et sachant que l'approvisionnement en ressources est en transit vers la première destination avant le réacheminement.

9. Le procédé d'après la revendication 8, comprenant en outre le fait de :
déterminer, sur la base des données de permission, un prestataire logistique transportant l'approvisionnement en ressources vers la première destination ;
transmettre, via le *smart contract,* des informations d'acheminement au prestataire logistique, sachant que les informations d'acheminement comprennent des instructions pour le réacheminement ; et de
enregistrer une signature numérique du prestataire logistique, la signature numérique correspondant à une confirmation des instructions pour le réacheminement.

10. Le procédé d'après la revendication 7, sachant que au moins ladite partie de l'approvisionnement en ressources est réacheminée vers la première entité sur la base d'une métrique d'expiration des ressources.

11. Le procédé d'après la revendication 7, sachant qu'une instance du *smart contract* est enregistrée sur une blockchain, le procédé comprenant en outre le fait de :
enregistrer les premières données et les deuxièmes données sur la blockchain ;
auditer les données enregistrées sur la blockchain ; et de
générer un rapport sur la base de l'audit, sachant que le rapport comprend des informations permettant d'établir une chaîne de traçabilité pour la ressource et un ou plusieurs produits bruts ou intermédiaires utilisés pour produire la ressource.

12. Le procédé d'après la revendication 7, sachant que la ou les opérations à l'intérieur du réseau de détection de demande comprennent la planification d'un envoi de la ressource vers une entité associée au deuxième nœud DLT et l'une parmi une augmentation du taux de production de la ressource ou une diminution du taux de production de la ressource.

13. Un support de stockage non transitoire lisible par ordinateur stockant des instructions qui, lorsqu'elles sont exécutées par un ou plusieurs processeurs, amènent le ou les processeurs à exécuter le procédé d'après l'une quelconque des revendications de 7 à 12.
